# EUROPEAN PATENT APPLICATION

(11) **EP 4 510 755 A1**
(43) Date of publication of application: **19.02.2025**
(21) Application number: 23788564.5
(22) Date of filing: 11.04.2023
(51) Int. Cl.: H04W 74/08, H04W 72/20, H04W 72/02, H04W 4/40, H04W 92/18, H04L 1/18

(54) **CHANNEL SENSING METHOD AND DEVICE FOR NR SIDELINK TRANSMISSION IN UNLICENSED BAND**

(30) Priority: 12.04.2022 KR 20220045309
(71) Applicant: LG Electronics Inc., Yeongdeungpo-gu Seoul 07336 (KR)
(72) Inventor: HWANG, Daesung, Seoul 06772 (KR); LEE, Seungmin, Seoul 06772 (KR)
(74) Representative: Frenkel, Matthias Alexander
(86) International application number: PCT/KR2023/004846
(87) International publication number: WO 2023/200215

(57) **Abstract**

An operation method for a first device (100) in a wireless communication system is presented. The method may comprise the steps of: receiving information about a COT from a second device (200); receiving a plurality of PSSCHs; and determining to use the COT in order to transmit a plurality of PSFCHs related to the plurality of PSSCHs on the basis that a first PSFCH related to a first PSSCH from among the plurality of PSSCHs is transmitted, to the second device (200), from a first resource within a first RB set related to the COT.

## Description

### TECHNICAL FIELD

This disclosure relates to a wireless communication system.

### BACKGROUND

Sidelink (SL) communication is a communication scheme in which a direct link is established between User Equipments (UEs) and the UEs exchange voice and data directly with each other without intervention of an evolved Node B (eNB). SL communication is under consideration as a solution to the overhead of an eNB caused by rapidly increasing data traffic. Vehicle-to-everything (V2X) refers to a communication technology through which a vehicle exchanges information with another vehicle, a pedestrian, an entity having an infrastructure (or infra) established therein, and so on. The V2X may be spread into 4 types, such as vehicle-to-vehicle (V2V), vehicle-to-infrastructure (V2I), vehicle-to-network (V2N), and vehicle-to-pedestrian (V2P). The V2X communication may be provided via a PC5 interface and/or Uu interface.

Meanwhile, as a wider range of communication devices require larger communication capacities, the need for mobile broadband communication that is more enhanced than the existing Radio Access Technology (RAT) is rising. Accordingly, discussions are made on services and user equipment (UE) that are sensitive to reliability and latency. And, a next generation radio access technology that is based on the enhanced mobile broadband communication, massive Machine Type Communication (MTC), Ultra-Reliable and Low Latency Communication (URLLC), and so on, may be referred to as a new radio access technology (RAT) or new radio (NR).

### DISCLOSURE

### TECHNICAL SOLUTION

According to an embodiment of the present disclosure, a method for performing, by a first device, wireless communication may be proposed. For example, the method may comprise: receiving, from a second device, information for a channel occupancy time, COT; receiving a plurality of physical sidelink shared channels, PSSCHs; and determining to use the COT for transmitting a plurality of physical sidelink feedback channels, PSFCHs, related to the plurality of PSSCHs, based on a first PSFCH, related to a first PSSCH among the plurality PSSCHs, being to be transmitted to the second device on a first resource within a first resource block, RB, set related to the COT.

According to an embodiment of the present disclosure, a first device performing wireless communication may be proposed. For example, the first device may comprise: at least one transceiver; at least one processor; and at least one memory operably connected to the at least one processor and storing instructions that, based on being executed by the at least one processor, cause the first device to perform operations. For example, the operations may comprise: receiving, from a second device, information for a channel occupancy time, COT; receiving a plurality of physical sidelink shared channels, PSSCHs; and determining to use the COT for transmitting a plurality of physical sidelink feedback channels, PSFCHs, related to the plurality of PSSCHs, based on a first PSFCH, related to a first PSSCH among the plurality PSSCHs, being to be transmitted to the second device on a first resource within a first resource block, RB, set related to the COT.

According to an embodiment of the present disclosure, a device adapted to control a first user equipment, UE, may be proposed. For example, the device may comprise: at least one processor; and at least one memory operably connected to the at least one processor and storing instructions that, based on being executed by the at least one processor, cause the first UE to perform operations. For example, the operations may comprise: receiving, from a second UE, information for a channel occupancy time, COT; receiving a plurality of physical sidelink shared channels, PSSCHs; and determining to use the COT for transmitting a plurality of physical sidelink feedback channels, PSFCHs, related to the plurality of PSSCHs, based on a first PSFCH, related to a first PSSCH among the plurality PSSCHs, being to be transmitted to the second UE on a first resource within a first resource block, RB, set related to the COT.

According to an embodiment of the present disclosure, a non-transitory computer-readable storage medium storing instructions may be proposed. For example, the instructions, based on being executed, may cause a first device to: receive, from a second device, information for a channel occupancy time, COT; receive a plurality of physical sidelink shared channels, PSSCHs; and determine to use the COT for transmitting a plurality of physical sidelink feedback channels, PSFCHs, related to the plurality of PSSCHs, based on a first PSFCH, related to a first PSSCH among the plurality PSSCHs, being to be transmitted to the second device on a first resource within a first resource block, RB, set related to the COT.

According to an embodiment of the present disclosure, a method for performing, by a second device, wireless communication may be proposed. For example, the method may comprise: transmitting, to a first device, information for a channel occupancy time, COT; transmitting, to the first device, a first physical sidelink shared channel, PSSCH; receiving, from the first device, a first physical sidelink feedback channel, PSFCH, related to the first PSSCH based on the COT, wherein the COT may be used for a transmission of a plurality of PSFCHs, based on the first PSFCH among the plurality of PSFCHs to be transmitted by the first device being to be transmitted to the second device.

According to an embodiment of the present disclosure, a second device performing wireless communication may be proposed. For example, the second device may comprise: at least one transceiver; at least one processor; and at least one memory operably connected to the at least one processor and storing instructions that, based on being executed by the at least one processor, cause the second device to perform operations. For example, the operations may comprise: transmitting, to a first device, information for a channel occupancy time, COT; transmitting, to the first device, a first physical sidelink shared channel, PSSCH; receiving, from the first device, a first physical sidelink feedback channel, PSFCH, related to the first PSSCH based on the COT, wherein the COT may be used for a transmission of a plurality of PSFCHs, based on the first PSFCH among the plurality of PSFCHs to be transmitted by the first device being to be transmitted to the second device.

### ADVANTAGEOUS EFFECTS

The user equipment (UE) may efficiently perform SL communication.

### BRIEF DESCRIPTION OF THE DRAWINGS

FIG. 1 shows a communication structure that can be provided in a 6G system, according to one embodiment of the present disclosure.
FIG. 2 shows an electromagnetic spectrum, according to one embodiment of the present disclosure.
FIG. 3 shows a structure of an NR system, based on an embodiment of the present disclosure.
FIG. 4 shows a radio protocol architecture, based on an embodiment of the present disclosure.
FIG. 5 shows a structure of a radio frame of an NR, based on an embodiment of the present disclosure.
FIG. 6 shows a structure of a slot of an NR frame, based on an embodiment of the present disclosure.
FIG. 7 shows an example of a BWP, based on an embodiment of the present disclosure.
FIG. 8 shows a procedure of performing V2X or SL communication by a UE based on a transmission mode, based on an embodiment of the present disclosure.
FIG. 9 shows three cast types, based on an embodiment of the present disclosure.
FIG. 10 shows an example of a wireless communication system supporting an unlicensed band, based on an embodiment of the present disclosure.
FIG. 11 shows a method of occupying resources in an unlicensed band, based on an embodiment of the present disclosure.
FIG. 12 shows a case in which a plurality of LBT-SBs are included in an unlicensed band, based on an embodiment of the present disclosure.
FIG. 13 shows CAP operations performed by a base station to transmit a downlink signal through an unlicensed band, based on an embodiment of the present disclosure.
FIG. 14 shows type 1 CAP operations performed by a UE to transmit an uplink signal, based on an embodiment of the present disclosure.
FIG. 15 shows a procedure in which a first device performs a transmission using COT for a plurality of PSFCHs, according to one embodiment of the present disclosure.
FIG. 16 shows an example of a PSFCH transmitting UE that has received a shared COT performing a PSFCH transmission based on the COT, according to one embodiment of the present disclosure.
FIG. 17 shows a procedure for a first device to perform wireless communication, according to one embodiment of the present disclosure.
FIG. 18 shows a procedure for a second device to perform wireless communication, according to one embodiment of the present disclosure.
FIG. 19 shows a communication system 1, based on an embodiment of the present disclosure.
FIG. 20 shows wireless devices, based on an embodiment of the present disclosure.
FIG. 21 shows a signal process circuit for a transmission signal, based on an embodiment of the present disclosure.
FIG. 22 shows another example of a wireless device, based on an embodiment of the present disclosure.
FIG. 23 shows a hand-held device, based on an embodiment of the present disclosure.
FIG. 24 shows a vehicle or an autonomous vehicle, based on an embodiment of the present disclosure.

### MODE FOR INVENTION

In the present disclosure, "A or B" may mean "only A", "only B" or "both A and B." In other words, in the present disclosure, "A or B" may be interpreted as "A and/or B". For example, in the present disclosure, "A, B, or C" may mean "only A", "only B", "only C", or "any combination of A, B, C".

A slash (/) or comma used in the present disclosure may mean "and/or". For example, "A/B" may mean "A and/or B". Accordingly, "A/B" may mean "only A", "only B", or "both A and B". For example, "A, B, C" may mean "A, B, or C".

In the present disclosure, "at least one of A and B" may mean "only A", "only B", or "both A and B". In addition, in the present disclosure, the expression "at least one of A or B" or "at least one of A and/or B" may be interpreted as "at least one of A and B".

In addition, in the present disclosure, "at least one of A, B, and C" may mean "only A", "only B", "only C", or "any combination of A, B, and C". In addition, "at least one of A, B, or C" or "at least one of A, B, and/or C" may mean "at least one of A, B, and C".

In addition, a parenthesis used in the present disclosure may mean "for example". Specifically, when indicated as "control information (PDCCH)", it may mean that "PDCCH" is proposed as an example of the "control information". In other words, the "control information" of the present disclosure is not limited to "PDCCH", and "PDCCH" may be proposed as an example of the "control information". In addition, when indicated as "control information (i.e., PDCCH)", it may also mean that "PDCCH" is proposed as an example of the "control information".

In the following description, 'when, if, or in case of' may be replaced with 'based on'.

A technical feature described individually in one figure in the present disclosure may be individually implemented, or may be simultaneously implemented.

In the present disclosure, a higher layer parameter may be a parameter which is configured, pre-configured or pre-defined for a UE. For example, a base station or a network may transmit the higher layer parameter to the UE. For example, the higher layer parameter may be transmitted through radio resource control (RRC) signaling or medium access control (MAC) signaling.

The technology described below may be used in various wireless communication systems such as code division multiple access (CDMA), frequency division multiple access (FDMA), time division multiple access (TDMA), orthogonal frequency division multiple access (OFDMA), single carrier frequency division multiple access (SC-FDMA), and so on. The CDMA may be implemented with a radio technology, such as universal terrestrial radio access (UTRA) or CDMA-2000. The TDMA may be implemented with a radio technology, such as global system for mobile communications (GSM)/general packet ratio service (GPRS)/enhanced data rate for GSM evolution (EDGE). The OFDMA may be implemented with a radio technology, such as institute of electrical and electronics engineers (IEEE) 802.11 (Wi-Fi), IEEE 802.16 (WiMAX), IEEE 802.20, evolved UTRA (E-UTRA), and so on. IEEE 802.16m is an evolved version of IEEE 802.16e and provides backward compatibility with a system based on the IEEE 802.16e. The UTRA is part of a universal mobile telecommunication system (UMTS). 3rd generation partnership project (3GPP) long term evolution (LTE) is part of an evolved UMTS (E-UMTS) using the E-UTRA. The 3GPP LTE uses the OFDMA in a downlink and uses the SC-FDMA in an uplink. LTE-advanced (LTE-A) is an evolution of the LTE.

5G NR is a successive technology of LTE-A corresponding to a new Clean-slate type mobile communication system having the characteristics of high performance, low latency, high availability, and so on. 5G NR may use resources of all spectrum available for usage including low frequency bands of less than 1GHz, middle frequency bands ranging from 1GHz to 10GHz, high frequency (millimeter waves) of 24GHz or more, and so on.

The 6G (wireless communication) system is aimed at (i) very high data rates per device, (ii) a very large number of connected devices, (iii) global connectivity, (iv) very low latency, (v) lower energy consumption for battery-free IoT devices, (vi) ultra-reliable connectivity, and (vii) connected intelligence with a machine learning capability. The vision of the 6G system can be in four aspects: intelligent connectivity, deep connectivity, holographic connectivity, and ubiquitous connectivity, and the 6G system may satisfy the requirements as shown in Table 1 below. In other words, Table 1 is an example of the requirements of the 6G system.

**[Table 1]**

| | |
|---|---|
| Per device peak data rate | 1 Tbps |
| E2E latency | 1 ms |
| Maximum spectral efficiency | 100bps/Hz |
| Mobility support | Up to 1000km/hr |
| Satellite integration | Fully |
| AI | Fully |
| Autonomous vehicle | Fully |
| XR | Fully |
| Haptic Communication | Fully |

6G system may have key factors such as eMBB(Enhanced mobile broadband), URLLC(Ultra-reliable low latency communications), mMTC(massive machine-type communication), AI integrated communication, Tactile internet, High throughput, High network capacity, High energy efficiency, Low backhaul and access network congestion, Enhanced data security.

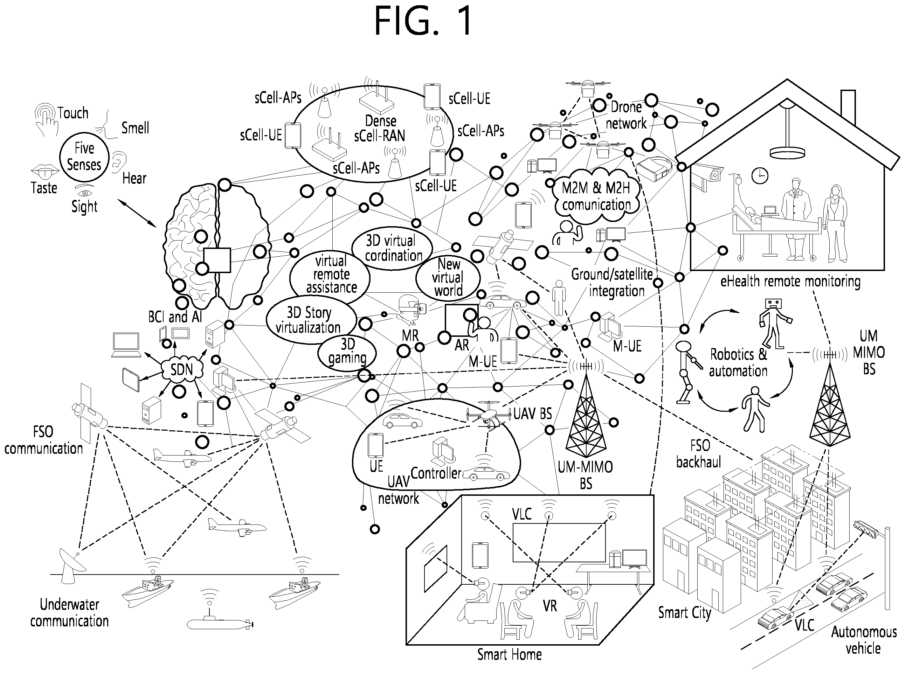

FIG. 1 shows a communication structure that can be provided in a 6G system, according to one embodiment of the present disclosure. The embodiment of FIG. 1 may be combined with various embodiments of the present disclosure.

6G systems are expected to have 50 times higher simultaneous radio connectivity than 5G radio systems. URLLC, a key feature of 5G, will become a more dominant technology in 6G communications by providing end-to-end delay of less than 1 ms. In 6G systems, volumetric spectral efficiency will be much better, as opposed to the area spectral efficiency often used today. 6G systems will be able to offer very long battery life and advanced battery technologies for energy harvesting, so mobile devices will not need to be recharged separately in 6G systems. In 6G, new network characteristics may be as follows.
- Satellites integrated network: To provide a global mobile population, 6G is expected to be integrated with satellite. The integration of terrestrial, satellite, and airborne networks into a single wireless communication system is important for 6G.
- Connected intelligence: Unlike previous generations of wireless communication systems, 6G is revolutionary and the wireless evolution will be updated from "connected things" to "connected intelligence". AI can be applied at each step of the communication procedure (or each step of signal processing, as will be described later).
- Seamless integration wireless information and energy transfer: 6G wireless networks will deliver power to charge batteries of devices such as smartphones and sensors. Therefore, wireless information and energy transfer (WIET) will be integrated.
- Ubiquitous super 3D connectivity: Super 3D connection will be generated from 6G ubiquity to access networks and core network functions on drones and very low Earth orbit satellites.

Given the above new network characteristics of 6G, some common requirements may be as follows
- small cell networks: The idea of small cell networks was introduced in cellular systems to improve received signal quality as a result of improved processing throughput, energy efficiency, and spectral efficiency. As a result, small cell networks are an essential characteristic for communication systems over 5G and beyond 5G (5GB). Therefore, 6G communication systems will also adopt the characteristics of small cell networks.
- Ultra-dense heterogeneous network: Ultra-dense heterogeneous networks will be another important characteristic of 6G communication systems. Multi-tier networks composed of heterogeneous networks will improve overall QoS and reduce costs.
- High-capacity backhaul: Backhaul connection is characterized by high-capacity backhaul networks to support large volumes of traffic. High-speed fiber optics and free-space optics (FSO) systems may be a possible solution to this problem.
- Radar technology integrated with mobile technology: High-precision localization (or location-based services) through communication is one of the features of 6G wireless communication systems. Therefore, radar systems will be integrated with 6G networks.
- Softwarization and virtualization: Softwareization and virtualization are two important features that are fundamental to the design process in a 5GB network to ensure flexibility, reconfigurability, and programmability. In addition, billions of devices may be shared on a shared physical infrastructure.

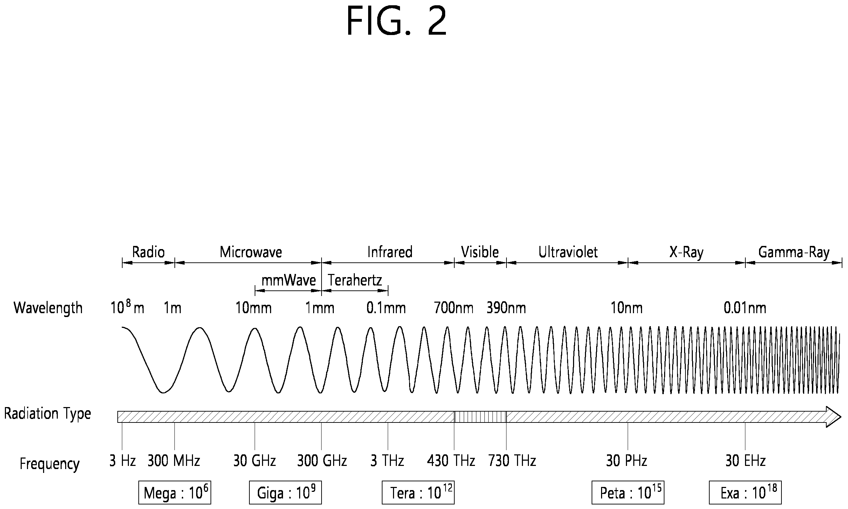

The following describes the core implementation technologies for 6G systems.
- Artificial Intelligence: The most important and new technology that will be introduced in the 6G system is AI. The 4G system did not involve AI. 5G systems will support partial or very limited AI. However, 6G systems will be fully AI-enabled for automation. Advances in machine learning will create more intelligent networks for real-time communication in 6G. The introduction of AI in telecommunications may streamline and improve real-time data transmission. AI may use numerous analytics to determine the way complex target operations are performed, which means AI can increase efficiency and reduce processing delays. Time-consuming tasks such as handover, network selection, and resource scheduling can be done instantly by using AI. AI may also play an important role in M2M, machine-to-human, and human-to-machine communications. In addition, AI may become a rapid communication in Brain Computer Interface (BCI). AI-based communication systems can be supported by metamaterials, intelligent structures, intelligent networks, intelligent devices, intelligent cognitive radios, self-sustaining wireless networks, and machine learning
- THz Communication (Terahertz Communication): Data rates can be increased by increasing bandwidth. This can be accomplished by using sub-THz communication with a wide bandwidth and applying advanced massive MIMO technology. THz waves, also known as sub-millimeter radiation, refer to frequency bands between 0.1 and 10 THz with corresponding wavelengths typically ranging from 0.03 mm-3 mm. The 100 GHz-300 GHz band range (Sub THz band) is considered the main part of the THz band for cellular communications. Adding the Sub-THz band to the mmWave band increases the capacity of 6G cellular communications. 300 GHz-3 THz in the defined THz band is in the far infrared (IR) frequency band. The 300 GHz-3 THz band is part of the optical band, but it is on the border of the optical band, just behind the RF band. Thus, the 300 GHz-3 THz band exhibits similarities to RF. FIG. 2 shows an electromagnetic spectrum, according to one embodiment of the present disclosure. The embodiment of FIG. 2 may be combined with various embodiments of the present disclosure. Key characteristics of THz communications include (i) widely available bandwidth to support very high data rates, and (ii) high path loss at high frequencies (for which highly directive antennas are indispensable). The narrow beamwidth produced by highly directive antennas reduces interference. The small wavelength of THz signals allows a much larger number of antenna elements to be integrated into devices and BSs operating in this band. This enables the use of advanced adaptive array techniques that can overcome range limitations.
- Large-scale MIMO
- HBF, Hologram Bmeaforming
- Optical wireless technology
- FSO Backhaul Network
- Non-Terrestrial Networks, NTN
- Quantum Communication
- Cell-free Communication
- Integration of Wireless Information and Power Transmission
- Integration of Wireless Communication and Sensing
- Integrated Access and Backhaul Network
- Big data Analysis
- Reconfigurable Intelligent Surface
- Metaverse
- Block-chain
- UAV, Unmanned Aerial Vehicle: Unmanned aerial vehicles (UAVs), or drones, will be an important component of 6G wireless communications. In most cases, high-speed data wireless connection is provided using UAV technology. A BS entity is installed on a UAV to provide cellular connection. UAVs have specific features not found in fixed BS infrastructure, such as easy deployment, strong line-of-sight links, and freedom of controlled mobility. During emergencies, such as natural disasters, the deployment of terrestrial communication infrastructure is not economically feasible and sometimes cannot provide services in volatile environments. UAVs can easily handle these situations. UAVs will be a new paradigm in wireless communications. This technology facilitates three basic requirements of wireless networks: eMBB, URLLC, and mMTC. UAVs can also support many other purposes such as enhancing network connectivity, fire detection, disaster emergency services, security and surveillance, pollution monitoring, parking monitoring, accident monitoring, etc. Therefore, UAV technology is recognized as one of the most important technologies for 6G communications.
- Autonomous Driving, Self-driving: For perfect autonomous driving, vehicles must communicate with each other to inform each other of dangerous situations, or with infrastructure such as parking lots and traffic lights to check information such as the location of parking information and signal change times. Vehicle to Everything (V2X), a key element in building an autonomous driving infrastructure, is a technology that allows vehicles to communicate and share information with various elements on the road, in order to perform autonomous driving, such as vehicle-to-vehicle (V2V) wireless communication and vehicle-to-infrastructure (V2I) wireless communication. In order to maximize the performance of autonomous driving and ensure high safety, fast transmission speeds and low latency technologies are essential. In addition, in the future, autonomous driving will go beyond delivering warnings or guidance messages to a driver to actively intervene in vehicle operation and directly control the vehicle in dangerous situations, so the amount of information that needs to be transmitted and received will be vast, and 6G is expected to maximize autonomous driving with faster transmission speeds and lower latency than 5G.

For the sake of clarity, the description focuses on 5G NR, but the technical ideas of one embodiment of the present disclosure are not limited thereto. Various embodiments of the present disclosure may also be applicable to 6G communication systems.

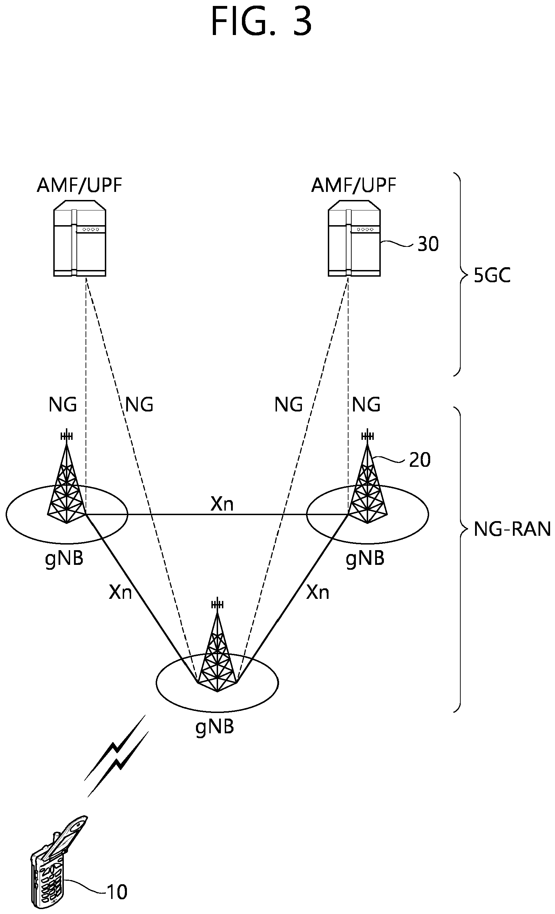

FIG. 3 shows a structure of an NR system, based on an embodiment of the present disclosure. The embodiment of FIG. 3 may be combined with various embodiments of the present disclosure.

Referring to FIG. 3, a next generation-radio access network (NG-RAN) may include a BS 20 providing a UE 10 with a user plane and control plane protocol termination. For example, the BS 20 may include a next generation-Node B (gNB) and/or an evolved-NodeB (eNB). For example, the UE 10 may be fixed or mobile and may be referred to as other terms, such as a mobile station (MS), a user terminal (UT), a subscriber station (SS), a mobile terminal (MT), wireless device, and so on. For example, the BS may be referred to as a fixed station which communicates with the UE 10 and may be referred to as other terms, such as a base transceiver system (BTS), an access point (AP), and so on.

The embodiment of FIG. 3 exemplifies a case where only the gNB is included. The BSs 20 may be connected to one another via Xn interface. The BS 20 may be connected to one another via 5th generation (5G) core network (5GC) and NG interface. More specifically, the BSs 20 may be connected to an access and mobility management function (AMF) 30 via NG-C interface, and may be connected to a user plane function (UPF) 30 via NG-U interface.

Layers of a radio interface protocol between the UE and the network can be classified into a first layer (layer 1, L1), a second layer (layer 2, L2), and a third layer (layer 3, L3) based on the lower three layers of the open system interconnection (OSI) model that is well-known in the communication system. Among them, a physical (PHY) layer belonging to the first layer provides an information transfer service by using a physical channel, and a radio resource control (RRC) layer belonging to the third layer serves to control a radio resource between the UE and the network. For this, the RRC layer exchanges an RRC message between the UE and the BS.

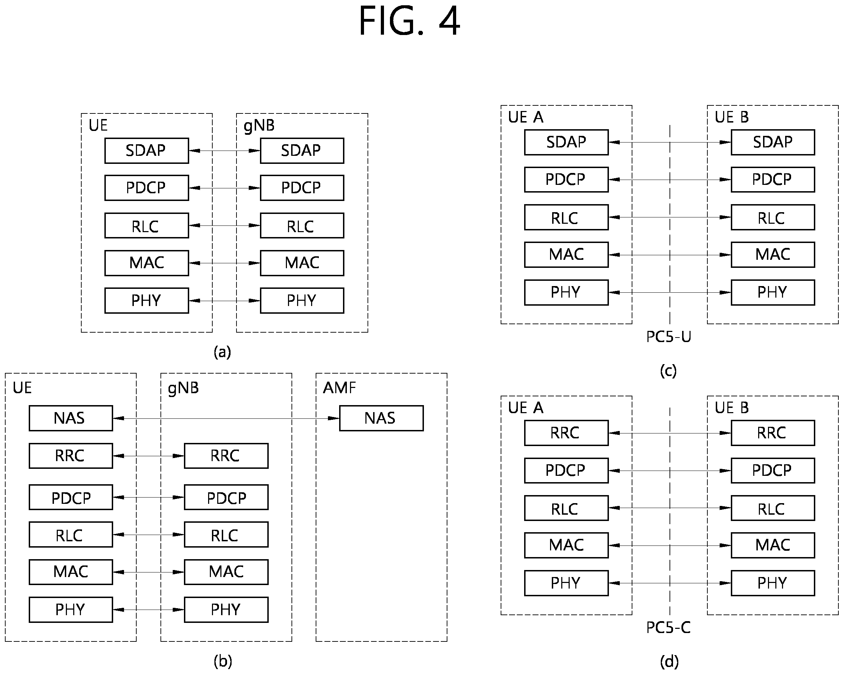

FIG. 4 shows a radio protocol architecture, based on an embodiment of the present disclosure. The embodiment of FIG. 4 may be combined with various embodiments of the present disclosure. Specifically, (a) of FIG. 4 shows a radio protocol stack of a user plane for Uu communication, and (b) of FIG. 4 shows a radio protocol stack of a control plane for Uu communication. (c) of FIG. 4 shows a radio protocol stack of a user plane for SL communication, and (d) of FIG. 4 shows a radio protocol stack of a control plane for SL communication.

Referring to FIG. 4, a physical layer provides an upper layer with an information transfer service through a physical channel. The physical layer is connected to a medium access control (MAC) layer which is an upper layer of the physical layer through a transport channel. Data is transferred between the MAC layer and the physical layer through the transport channel. The transport channel is classified according to how and with what characteristics data is transmitted through a radio interface.

Between different physical layers, i.e., a physical layer of a transmitter and a physical layer of a receiver, data are transferred through the physical channel. The physical channel is modulated using an orthogonal frequency division multiplexing (OFDM) scheme, and utilizes time and frequency as a radio resource.

The MAC layer provides services to a radio link control (RLC) layer, which is a higher layer of the MAC layer, via a logical channel. The MAC layer provides a function of mapping multiple logical channels to multiple transport channels. The MAC layer also provides a function of logical channel multiplexing by mapping multiple logical channels to a single transport channel. The MAC layer provides data transfer services over logical channels.

The RLC layer performs concatenation, segmentation, and reassembly of Radio Link Control Service Data Unit (RLC SDU). In order to ensure diverse quality of service (QoS) required by a radio bearer (RB), the RLC layer provides three types of operation modes, i.e., a transparent mode (TM), an unacknowledged mode (UM), and an acknowledged mode (AM). An AM RLC provides error correction through an automatic repeat request (ARQ).

A radio resource control (RRC) layer is defined only in the control plane. The RRC layer serves to control the logical channel, the transport channel, and the physical channel in association with configuration, reconfiguration and release of RBs. The RB is a logical path provided by the first layer (i.e., the physical layer or the PHY layer) and the second layer (i.e., a MAC layer, an RLC layer, a packet data convergence protocol (PDCP) layer, and a service data adaptation protocol (SDAP) layer) for data delivery between the UE and the network.

Functions of a packet data convergence protocol (PDCP) layer in the user plane include user data delivery, header compression, and ciphering. Functions of a PDCP layer in the control plane include control-plane data delivery and ciphering/integrity protection.

A service data adaptation protocol (SDAP) layer is defined only in a user plane. The SDAP layer performs mapping between a Quality of Service (QoS) flow and a data radio bearer (DRB) and QoS flow ID (QFI) marking in both DL and UL packets.

The configuration of the RB implies a process for specifying a radio protocol layer and channel properties to provide a particular service and for determining respective detailed parameters and operations. The RB can be classified into two types, i.e., a signaling RB (SRB) and a data RB (DRB). The SRB is used as a path for transmitting an RRC message in the control plane. The DRB is used as a path for transmitting user data in the user plane.

When an RRC connection is established between an RRC layer of the UE and an RRC layer of the E-UTRAN, the UE is in an RRC_CONNECTED state, and, otherwise, the UE may be in an RRC_IDLE state. In case of the NR, an RRC_INACTIVE state is additionally defined, and a UE being in the RRC_INACTIVE state may maintain its connection with a core network whereas its connection with the BS is released.

Data is transmitted from the network to the UE through a downlink transport channel. Examples of the downlink transport channel include a broadcast channel (BCH) for transmitting system information and a downlink-shared channel (SCH) for transmitting user traffic or control messages. Traffic of downlink multicast or broadcast services or the control messages can be transmitted on the downlink-SCH or an additional downlink multicast channel (MCH). Data is transmitted from the UE to the network through an uplink transport channel. Examples of the uplink transport channel include a random access channel (RACH) for transmitting an initial control message and an uplink SCH for transmitting user traffic or control messages.

Examples of logical channels belonging to a higher channel of the transport channel and mapped onto the transport channels include a broadcast channel (BCCH), a paging control channel (PCCH), a common control channel (CCCH), a multicast control channel (MCCH), a multicast traffic channel (MTCH), etc.

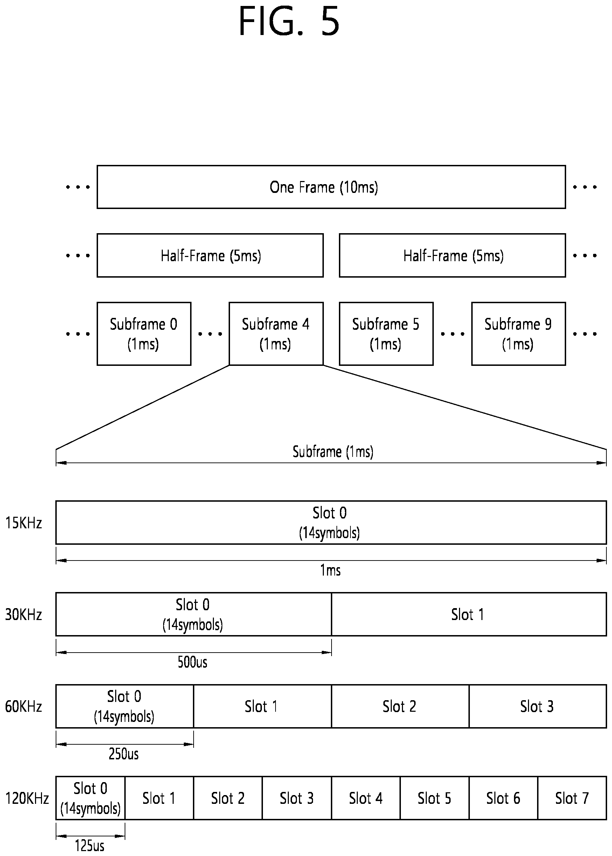

FIG. 5 shows a structure of a radio frame of an NR, based on an embodiment of the present disclosure. The embodiment of FIG. 5 may be combined with various embodiments of the present disclosure.

Referring to FIG. 5, in the NR, a radio frame may be used for performing uplink and downlink transmission. A radio frame has a length of 10ms and may be defined to be configured of two half-frames (HFs). A half-frame may include five 1ms subframes (SFs). A subframe (SF) may be spread into one or more slots, and the number of slots within a subframe may be determined based on subcarrier spacing (SCS). Each slot may include 12 or 14 OFDM(A) symbols according to a cyclic prefix (CP).

In case of using a normal CP, each slot may include 14 symbols. In case of using an extended CP, each slot may include 12 symbols. Herein, a symbol may include an OFDM symbol (or CP-OFDM symbol) and a Single Carrier-FDMA (SC-FDMA) symbol (or Discrete Fourier Transform-spread-OFDM (DFT-s-OFDM) symbol).

The following Table 2 shows the number of symbols per slot (N^{Slot}_{symb}), number of slots per frame (N^{frame,u}ₛₗₒₜ), and number of slots per subframe (N^{subframe,u}ₛₗₒₜ), depending on the SCS configuration (u), when Normal CP or Extended CP is used.

**[Table 2]**

| CP type | SCS (15*2^{u}) | N^{slot}_{symb} | N^{frame,u}ₛₗₒₜ | N^{subframe,u}ₛₗₒₜ |
|---|---|---|---|---|
| normal CP | 15kHz (u=0) | 14 | 10 | 1 |
| | 30kHz (u=1) | 14 | 20 | 2 |
| | 60kHz (u=2) | 14 | 40 | 4 |
| | 120kHz (u=3) | 14 | 80 | 8 |
| | 240kHz (u=4) | 14 | 160 | 16 |
| extended CP | 60kHz (u=2) | 12 | 40 | 4 |

In an NR system, OFDM(A) numerologies (e.g., SCS, CP length, and so on) between multiple cells being integrate to one UE may be differently configured. Accordingly, a (absolute time) duration (or section) of a time resource (e.g., subframe, slot or TTI) (collectively referred to as a time unit (TU) for simplicity) being configured of the same number of symbols may be differently configured in the integrated cells.

In the NR, multiple numerologies or SCSs for supporting diverse 5G services may be supported. For example, in case an SCS is 15kHz, a wide area of the conventional cellular bands may be supported, and, in case an SCS is 30kHz/60kHz a dense-urban, lower latency, wider carrier bandwidth may be supported. In case the SCS is 60kHz or higher, a bandwidth that is greater than 24.25GHz may be used in order to overcome phase noise.

An NR frequency band may be defined as two different types of frequency ranges. The two different types of frequency ranges may be FR1 and FR2. The values of the frequency ranges may be changed (or varied), and, for example, the two different types of frequency ranges may be as shown below in Table 3. Among the frequency ranges that are used in an NR system, FR1 may mean a "sub 6GHz range", and FR2 may mean an "above 6GHz range" and may also be referred to as a millimeter wave (mmW).

**[Table 3]**

| Frequency Range designation | Corresponding frequency range | Subcarrier Spacing (SCS) |
|---|---|---|
| FR1 | 450MHz - 6000MHz | 15, 30, 60kHz |
| FR2 | 24250MHz - 52600MHz | 60, 120, 240kHz |

As described above, the values of the frequency ranges in the NR system may be changed (or varied). For example, as shown below in Table 4, FR1 may include a band within a range of 410MHz to 7125MHz. More specifically, FR1 may include a frequency band of 6GHz (or 5850, 5900, 5925 MHz, and so on) and higher. For example, a frequency band of 6GHz (or 5850, 5900, 5925 MHz, and so on) and higher being included in FR1 mat include an unlicensed band. The unlicensed band may be used for diverse purposes, e.g., the unlicensed band for vehicle-specific communication (e.g., automated driving).

**[Table 4]**

| Frequency Range designation | Corresponding frequency range | Subcarrier Spacing (SCS) |
|---|---|---|
| FR1 | 410MHz - 7125MHz | 15, 30, 60kHz |
| FR2 | 24250MHz - 52600MHz | 60, 120, 240kHz |

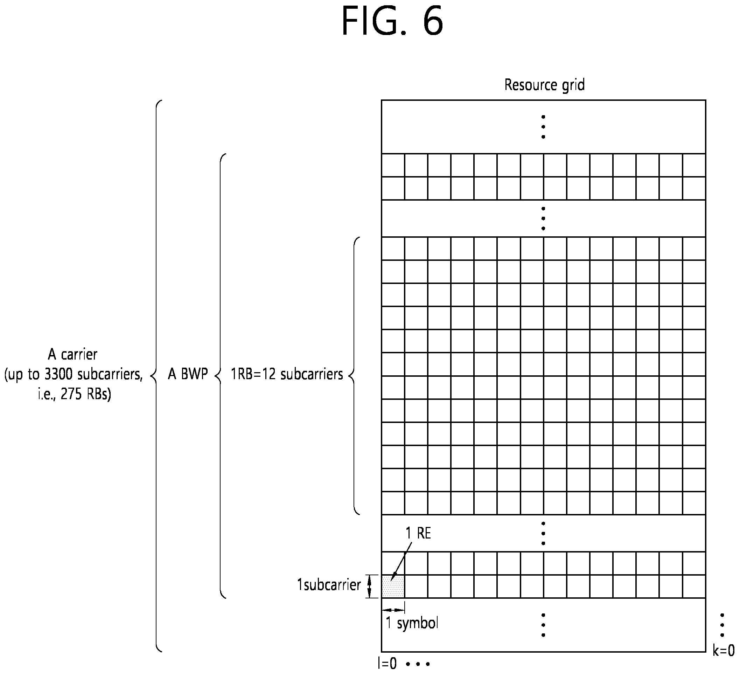

FIG. 6 shows a structure of a slot of an NR frame, based on an embodiment of the present disclosure. The embodiment of FIG. 6 may be combined with various embodiments of the present disclosure.

Referring to FIG. 6, a slot includes a plurality of symbols in a time domain. For example, in case of a normal CP, one slot may include 14 symbols. However, in case of an extended CP, one slot may include 12 symbols. Alternatively, in case of a normal CP, one slot may include 7 symbols. However, in case of an extended CP, one slot may include 6 symbols. A carrier includes a plurality of subcarriers in a frequency domain. A Resource Block (RB) may be defined as a plurality of consecutive subcarriers (e.g., 12 subcarriers) in the frequency domain. A Bandwidth Part (BWP) may be defined as a plurality of consecutive (Physical) Resource Blocks ((P)RBs) in the frequency domain, and the BWP may correspond to one numerology (e.g., SCS, CP length, and so on).

A carrier may include a maximum of N number BWPs (e.g., 5 BWPs). Data communication may be performed via an activated BWP. Each element may be referred to as a Resource Element (RE) within a resource grid and one complex symbol may be mapped to each element.

Hereinafter, a bandwidth part (BWP) and a carrier will be described.

The BWP may be a set of consecutive physical resource blocks (PRBs) in a given numerology. The PRB may be selected from consecutive sub-sets of common resource blocks (CRBs) for the given numerology on a given carrier

For example, the BWP may be at least any one of an active BWP, an initial BWP, and/or a default BWP. For example, the UE may not monitor downlink radio link quality in a DL BWP other than an active DL BWP on a primary cell (PCell). For example, the UE may not receive PDCCH, physical downlink shared channel (PDSCH), or channel state information - reference signal (CSI-RS) (excluding RRM) outside the active DL BWP. For example, the UE may not trigger a channel state information (CSI) report for the inactive DL BWP. For example, the UE may not transmit physical uplink control channel (PUCCH) or physical uplink shared channel (PUSCH) outside an active UL BWP. For example, in a downlink case, the initial BWP may be given as a consecutive RB set for a remaining minimum system information (RMSI) control resource set (CORESET) (configured by physical broadcast channel (PBCH)). For example, in an uplink case, the initial BWP may be given by system information block (SIB) for a random access procedure. For example, the default BWP may be configured by a higher layer. For example, an initial value of the default BWP may be an initial DL BWP. For energy saving, if the UE fails to detect downlink control information (DCI) during a specific period, the UE may switch the active BWP of the UE to the default BWP.

Meanwhile, the BWP may be defined for SL. The same SL BWP may be used in transmission and reception. For example, a transmitting UE may transmit an SL channel or an SL signal on a specific BWP, and a receiving UE may receive the SL channel or the SL signal on the specific BWP. In a licensed carrier, the SL BWP may be defined separately from a Uu BWP, and the SL BWP may have configuration signaling separate from the Uu BWP. For example, the UE may receive a configuration for the SL BWP from the BS/network. For example, the UE may receive a configuration for the Uu BWP from the BS/network. The SL BWP may be (pre-)configured in a carrier with respect to an out-of-coverage NR V2X UE and an RRC_IDLE UE. For the UE in the RRC_CONNECTED mode, at least one SL BWP may be activated in the carrier.

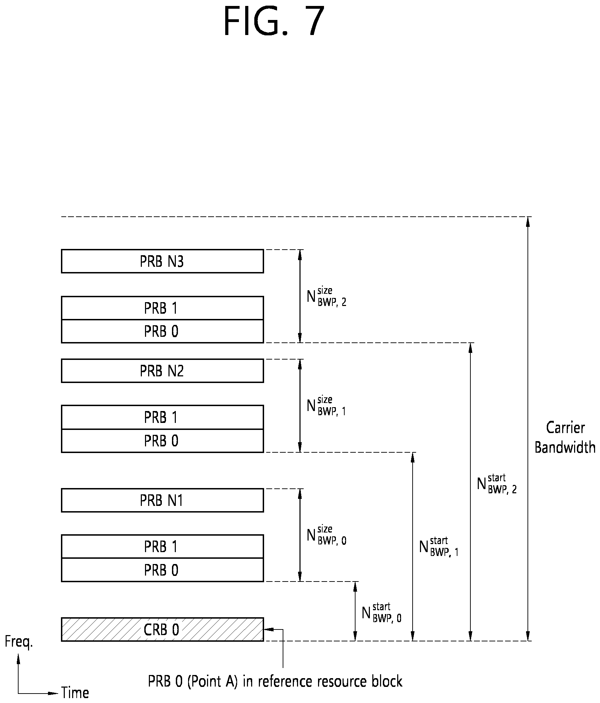

FIG. 7 shows an example of a BWP, based on an embodiment of the present disclosure. The embodiment of FIG. 7 may be combined with various embodiments of the present disclosure. It is assumed in the embodiment of FIG. 7 that the number of BWPs is 3.

Referring to FIG. 7, a common resource block (CRB) may be a carrier resource block numbered from one end of a carrier band to the other end thereof. In addition, the PRB may be a resource block numbered within each BWP. A point A may indicate a common reference point for a resource block grid.

The BWP may be configured by a point A, an offset N^{start}_{BWP} from the point A, and a bandwidth N^{size}_{BWP}. For example, the point A may be an external reference point of a PRB of a carrier in which a subcarrier 0 of all numerologies (e.g., all numerologies supported by a network on that carrier) is aligned. For example, the offset may be a PRB interval between a lowest subcarrier and the point A in a given numerology. For example, the bandwidth may be the number of PRBs in the given numerology.

Hereinafter, V2X or SL communication will be described.

A sidelink synchronization signal (SLSS) may include a primary sidelink synchronization signal (PSSS) and a secondary sidelink synchronization signal (SSSS), as an SL-specific sequence. The PSSS may be referred to as a sidelink primary synchronization signal (S-PSS), and the SSSS may be referred to as a sidelink secondary synchronization signal (S-SSS). For example, length-127 M-sequences may be used for the S-PSS, and length-127 gold sequences may be used for the S-SSS. For example, a UE may use the S-PSS for initial signal detection and for synchronization acquisition. For example, the UE may use the S-PSS and the S-SSS for acquisition of detailed synchronization and for detection of a synchronization signal ID.

A physical sidelink broadcast channel (PSBCH) may be a (broadcast) channel for transmitting default (system) information which must be first known by the UE before SL signal transmission/reception. For example, the default information may be information related to SLSS, a duplex mode (DM), a time division duplex (TDD) uplink/downlink (UL/DL) configuration, information related to a resource pool, a type of an application related to the SLSS, a subframe offset, broadcast information, or the like. For example, for evaluation of PSBCH performance, in NR V2X, a payload size of the PSBCH may be 56 bits including 24-bit cyclic redundancy check (CRC).

The S-PSS, the S-SSS, and the PSBCH may be included in a block format (e.g., SL synchronization signal (SS)/PSBCH block, hereinafter, sidelink-synchronization signal block (S-SSB)) supporting periodical transmission. The S-SSB may have the same numerology (i.e., SCS and CP length) as a physical sidelink control channel (PSCCH)/physical sidelink shared channel (PSSCH) in a carrier, and a transmission bandwidth may exist within a (pre-)configured sidelink (SL) BWP. For example, the S-SSB may have a bandwidth of 11 resource blocks (RBs). For example, the PSBCH may exist across 11 RBs. In addition, a frequency position of the S-SSB may be (pre-)configured. Accordingly, the UE does not have to perform hypothesis detection at frequency to discover the S-SSB in the carrier.

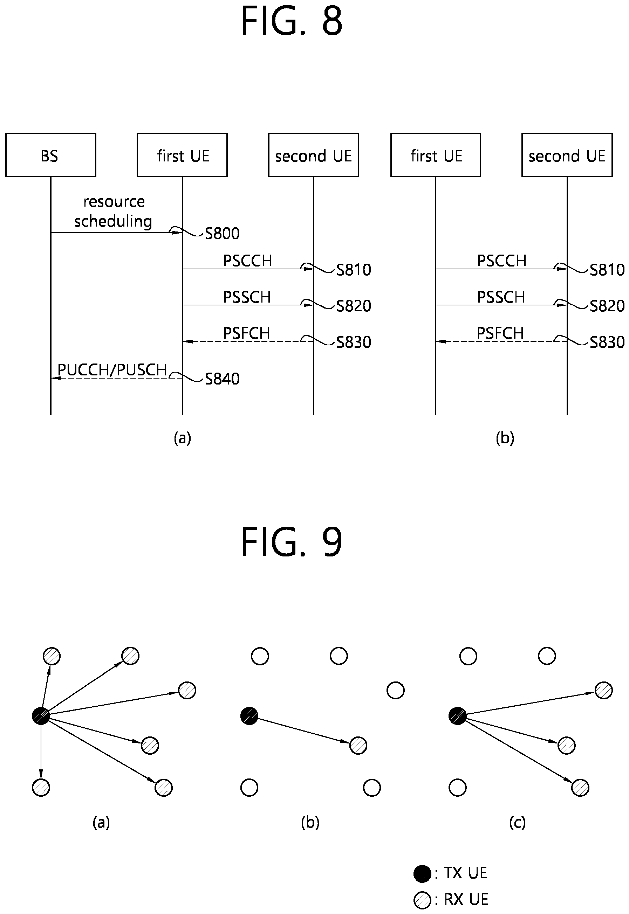

FIG. 8 shows a procedure of performing V2X or SL communication by a UE based on a transmission mode, based on an embodiment of the present disclosure. The embodiment of FIG. 8 may be combined with various embodiments of the present disclosure. In various embodiments of the present disclosure, the transmission mode may be called a mode or a resource allocation mode. Hereinafter, for convenience of explanation, in LTE, the transmission mode may be called an LTE transmission mode. In NR, the transmission mode may be called an NR resource allocation mode.

For example, (a) of FIG. 8 shows a UE operation related to an LTE transmission mode 1 or an LTE transmission mode 3. Alternatively, for example, (a) of FIG. 8 shows a UE operation related to an NR resource allocation mode 1. For example, the LTE transmission mode 1 may be applied to general SL communication, and the LTE transmission mode 3 may be applied to V2X communication.

For example, (b) of FIG. 8 shows a UE operation related to an LTE transmission mode 2 or an LTE transmission mode 4. Alternatively, for example, (b) of FIG. 8 shows a UE operation related to an NR resource allocation mode 2.

Referring to (a) of FIG. 8, in the LTE transmission mode 1, the LTE transmission mode 3, or the NR resource allocation mode 1, a base station may schedule SL resource(s) to be used by a UE for SL transmission. For example, in step S800, a base station may transmit information related to SL resource(s) and/or information related to UL resource(s) to a first UE. For example, the UL resource(s) may include PUCCH resource(s) and/or PUSCH resource(s). For example, the UL resource(s) may be resource(s) for reporting SL HARQ feedback to the base station.

For example, the first UE may receive information related to dynamic grant (DG) resource(s) and/or information related to configured grant (CG) resource(s) from the base station. For example, the CG resource(s) may include CG type 1 resource(s) or CG type 2 resource(s). In the present disclosure, the DG resource(s) may be resource(s) configured/allocated by the base station to the first UE through a downlink control information (DCI). In the present disclosure, the CG resource(s) may be (periodic) resource(s) configured/allocated by the base station to the first UE through a DCI and/or an RRC message. For example, in the case of the CG type 1 resource(s), the base station may transmit an RRC message including information related to CG resource(s) to the first UE. For example, in the case of the CG type 2 resource(s), the base station may transmit an RRC message including information related to CG resource(s) to the first UE, and the base station may transmit a DCI related to activation or release of the CG resource(s) to the first UE.

In step S810, the first UE may transmit a PSCCH (e.g., sidelink control information (SCI) or 1st-stage SCI) to a second UE based on the resource scheduling. In step S820, the first UE may transmit a PSSCH (e.g., 2nd-stage SCI, MAC PDU, data, etc.) related to the PSCCH to the second UE. In step S830, the first UE may receive a PSFCH related to the PSCCH/PSSCH from the second UE. For example, HARQ feedback information (e.g., NACK information or ACK information) may be received from the second UE through the PSFCH. In step S840, the first UE may transmit/report HARQ feedback information to the base station through the PUCCH or the PUSCH. For example, the HARQ feedback information reported to the base station may be information generated by the first UE based on the HARQ feedback information received from the second UE. For example, the HARQ feedback information reported to the base station may be information generated by the first UE based on a pre-configured rule. For example, the DCI may be a DCI for SL scheduling. For example, a format of the DCI may be a DCI format 3_0 or a DCI format 3_1.

Referring to (b) of FIG. 8, in the LTE transmission mode 2, the LTE transmission mode 4, or the NR resource allocation mode 2, a UE may determine SL transmission resource(s) within SL resource(s) configured by a base station/network or pre-configured SL resource(s). For example, the configured SL resource(s) or the pre-configured SL resource(s) may be a resource pool. For example, the UE may autonomously select or schedule resource(s) for SL transmission. For example, the UE may perform SL communication by autonomously selecting resource(s) within the configured resource pool. For example, the UE may autonomously select resource(s) within a selection window by performing a sensing procedure and a resource (re)selection procedure. For example, the sensing may be performed in a unit of subchannel(s). For example, in step S810, a first UE which has selected resource(s) from a resource pool by itself may transmit a PSCCH (e.g., sidelink control information (SCI) or 1 st-stage SCI) to a second UE by using the resource(s). In step S820, the first UE may transmit a PSSCH (e.g., 2nd-stage SCI, MAC PDU, data, etc.) related to the PSCCH to the second UE. In step S830, the first UE may receive a PSFCH related to the PSCCH/PSSCH from the second UE.

Referring to (a) or (b) of FIG. 8, for example, the first UE may transmit a SCI to the second UE through the PSCCH. Alternatively, for example, the first UE may transmit two consecutive SCIs (e.g., 2-stage SCI) to the second UE through the PSCCH and/or the PSSCH. In this case, the second UE may decode two consecutive SCIs (e.g., 2-stage SCI) to receive the PSSCH from the first UE. In the present disclosure, a SCI transmitted through a PSCCH may be referred to as a 1st SCI, a first SCI, a 1st-stage SCI or a 1st-stage SCI format, and a SCI transmitted through a PSSCH may be referred to as a 2nd SCI, a second SCI, a 2nd-stage SCI or a 2nd-stage SCI format. For example, the 1st-stage SCI format may include a SCI format 1-A, and the 2nd-stage SCI format may include a SCI format 2-A and/or a SCI format 2-B.

Referring to (a) or (b) of FIG. 8, in step S830, the first UE may receive the PSFCH. For example, the first UE and the second UE may determine a PSFCH resource, and the second UE may transmit HARQ feedback to the first UE using the PSFCH resource.

Referring to (a) of FIG. 8, in step S840, the first UE may transmit SL HARQ feedback to the base station through the PUCCH and/or the PUSCH.

The following describes a terminal procedure to report HARQ-ACK on a sidelink.

A UE may be instructed by SCI format that schedules a reception of PSSCH on one or more subchannels from N^{PSSCH}_{subch} to transmit a PSFCH that includes HARQ-ACK information in response to the reception of a PSSCH. A UE provides HARQ-ACK information including ACK or NACK, or NACK only.

A UE may be provided with the number of slots in a resource pool for PSFCH transmission occasion resources by sl-PSFCH-Period-r16. If the number is zero, PSFCH transmission from a UE is disabled in the resource pool. A UE expects to have a PSFCH transmission occasion resource in slot t'ₖ^{SL} (0≤k < T'ₘₐₓ) if k mod N^{PSFCH}_{PSSCH} = 0, where t'ₖ^{SL} is a slot in the resource pool, and T'ₘₐₓ is the number of slots in the resource pool within 10240 msec, and N^{PSFCH}_{PSSCH} is provided in sl-PSFCH-Period-r16. A UE may be instructed by the upper layer not to transmit a PSFCH in response to the reception of a PSSCH. If a UE receives a PSSCH in the resource pool and the HARQ feedback enabled/disabled indicator field included in the associated SCI format 2-A or SCI format 2-B has a value of 1, the UE provides HARQ-ACK information via PSFCH transmission from in resource pool. A UE transmits the PSFCH in a first slot, wherein the first slot is the slot including a PSFCH resource and after the minimum number of slots provided by sl-MinTimeGapPSFCH-r16 of the resource pool after the last slot of the PSSCH reception.

A UE is provided by sl-PSFCH-RB-Set-r16 with M^{PSFCH}_{PRB,set} of PRBs in a resource pool for PSFCH transmissions on PRBs in the resource pool. For the number of PSSCH slots related to a PSFCH slot that is less than or equal to N_{subch} and N^{PSFCH}_{PSSCH}, the number of subchannels for the resource pool provided by sl-NumSubchannel, a UE allocates the PRB [(i+j-N^{PSFCH}_{PSSCH})-M^{PSFCH}_{subch,slot}, (i+1+j-N^{PSFCH}_{PSSCH})-M^{PSFCH}_{subch,slot}-1] among the M_{PRB,set}^{PSFCH} PRB for slot i and subchannel j among the PSSCH slots associated with the PSFCH slot. Here, M^{PSFCH}_{subch,slot} = M^{PSFCH}_{PRB,set} / (N_{subch}-^{NPSFCH}_{PSSCH}), 0 ≤ i < N^{PSFCH}_{PSSCH}, 0 ≤ j < N_{subch}, and the allocations starts in ascending order for i and continues in ascending order for j. A UE expects M^{PSFCH}_{PRB,set} to be a multiple of N_{subch}·N^{PSFCH}PSSCH.

A UE determines the number of available PSFCH resources for multiplexing HARQ-ACK information included in a PSFCH transmission as R^{PSFCH}_{PRB,CS} = N^{PSFCH}_{type} ·M^{PSFCH}_{subch,slot}·N^{PSFCH}_{CS}. Here, N^{PSFCH}_{CS} may be the number of cyclic shift pairs for the resource pool, and based on an indication by the higher layer,
- N^{PSFCH}_{type} = 1, and M^{PSFCH}_{subch,slot} PRB may be related to the starting subchannel of the corresponding PSSCH,
- N^{PSFCH}_{type} = N^{PSSCH}_{subch} and N^{PSSCH}_{subch} ·M^{PSFCH}_{subch,slot} PRB is related to one or more subchannels among N^{PSSCH}_{subch} subchannels of the corresponding PSSCH.

A PSFCH resource is indexed first in ascending order of a PRB indexes among N^{PSFCH}_{type} M^{PSFCH}_{subch,slot} PRBs, after then, it is indexed in ascending order of cyclic shift pair indexes among N^{PSFCH}_{CS} cyclic shift pairs.

A UE determines an index of a PSFCH resource for a PSFCH transmission in response to the PSSCH reception as (P_{ID} + M_{ID}) mod R^{PSFCH}_{PRB,CS}. Here, P_{ID} is a physical layer source ID provided by SCI format 2-A or 2-B scheduling a PSSCH reception, M_{ID} is an ID of a UE receiving a PSSCH, indicated from the higher layer when a UE detects SCI format 2-A in which a cast type indicator field value is "01", M_{ID} is 0 otherwise.

A UE determines m₀ value for calculating a cyclic shift α value from N^{PSFCH}_{CS} and a cyclic shift pair index which corresponds to a PSFCH resource index using Table 5.

**[Table 5]**

| N^{PSFCH}_{cs} | m₀ | | | | | |
|---|---|---|---|---|---|---|
| | Cyclic shift pair index 0 | Cyclic shift pair index 1 | Cyclic shift pair index 2 | Cyclic shift pair index 3 | Cyclic shift pair index 4 | Cyclic shift pair index 5 |
| 1 | 0 | - | - | - | - | - |
| 2 | 0 | 3 | - | - | - | - |
| 3 | 0 | 2 | 4 | - | - | - |
| 6 | 0 | 1 | 2 | 3 | 4 | 5 |

As shown in Table 6, when a UE detects SCI format 2-A with a cast type indicator field value of "01" or "10", or as shown in Table 7, when a UE detects SCI format 2-B or SCI format 2-A with a cast type indicator field value of "11", a UE determines m_{cs} the value for calculating a cyclic shift α value. A UE applies one cyclic shift among cyclic shifts to a sequence used in a PSFCH transmission.

**[Table 6]**

| HARQ-ACK Value | 0 (NACK) | 1 (ACK) |
|---|---|---|
| Sequence cyclic shift | 0 | 6 |

**[Table 7]**

| HARQ-ACK Value | 0 (NACK) | 1 (ACK) |
|---|---|---|
| Sequence cyclic shift | 0 | N/A |

FIG. 9 shows three cast types, in accordance with an embodiment of the present disclosure. The embodiment of FIG. 9 may be combined with various embodiments of the present disclosure. Specifically, FIG. 9(a) shows broadcast-type SL communication, FIG. 9(b) shows unicast type-SL communication, and FIG. 9(c) shows groupcast-type SL communication. In case of the unicast-type SL communication, a UE may perform one-to-one communication with respect to another UE. In case of the groupcast-type SL transmission, the UE may perform SL communication with respect to one or more UEs in a group to which the UE belongs. In various embodiments of the present disclosure, SL groupcast communication may be replaced with SL multicast communication, SL one-to-many communication, or the like.

Meanwhile, in the conventional unlicensed spectrum (NR-U), a communication method between a UE and a base station is supported in an unlicensed band. In addition, a mechanism for supporting communication in an unlicensed band between sidelink UEs is planned to be supported in Rel-18.

In the present disclosure, a channel may refer to a set of frequency domain resources in which Listen-Before-Talk (LBT) is performed. In NR-U, the channel may refer to an LBT bandwidth with 20 MHz and may have the same meaning as an RB set. For example, the RB set may be defined in section 7 of 3GPP TS 38.214 V17.0.0.

In the present disclosure, channel occupancy (CO) may refer to time/frequency domain resources obtained by the base station or the UE after LBT success.

In the present disclosure, channel occupancy time (COT) may refer to time domain resources obtained by the base station or the UE after LBT success. It may be shared between the base station (or the UE) and the UE (or the base station) that obtained the CO, and this may be referred to as COT sharing. Depending on the initiating device, this may be referred to as gNB-initiated COT or UE-initiated COT.

Hereinafter, a wireless communication system supporting an unlicensed band/shared spectrum will be described.

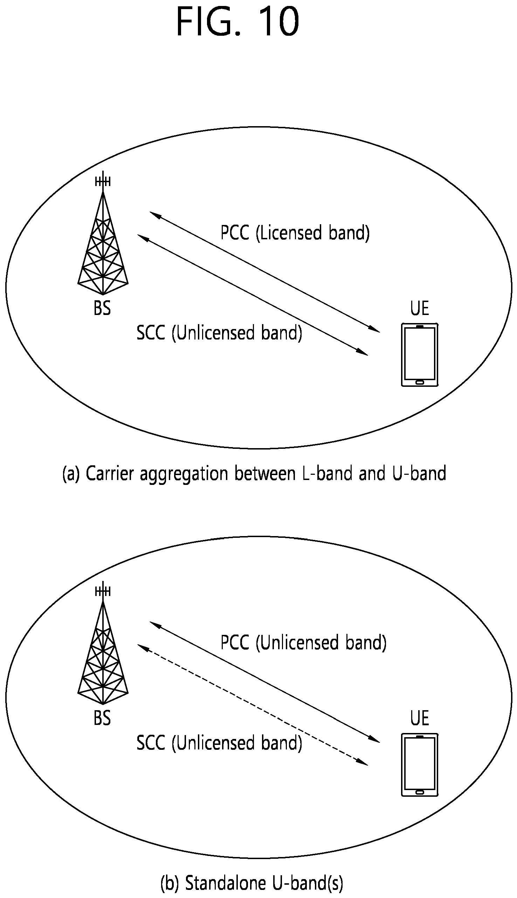

FIG. 10 shows an example of a wireless communication system supporting an unlicensed band, based on an embodiment of the present disclosure. For example, FIG. 10 may include an unlicensed spectrum (NR-U) wireless communication system. The embodiment of FIG. 10 may be combined with various embodiments of the present disclosure.

In the following description, a cell operating in a licensed band (hereinafter, L-band) may be defined as an L-cell, and a carrier of the L-cell may be defined as a (DL/UL/SL) LCC. In addition, a cell operating in an unlicensed band (hereinafter, U-band) may be defined as a U-cell, and a carrier of the U-cell may be defined as a (DL/UL/SL) UCC. The carrier/carrier-frequency of a cell may refer to the operating frequency (e.g., center frequency) of the cell. A cell/carrier (e.g., CC) is commonly called a cell.

When the base station and the UE transmit and receive signals on carrier-aggregated LCC and UCC as shown in (a) of FIG. 10, the LCC and the UCC may be configured as a primary CC (PCC) and a secondary CC (SCC), respectively. The base station and the UE may transmit and receive signals on one UCC or on a plurality of carrier-aggregated UCCs as shown in (b) of FIG. 10. In other words, the base station and the UE may transmit and receive signals only on UCC(s) without using any LCC. For a standalone operation, PRACH transmission, PUCCH transmission, PUSCH transmission, SRS transmission, etc. may be supported on a UCell.

In the embodiment of FIG. 10, the base station may be replaced with the UE. In this case, for example, PSCCH transmission, PSSCH transmission, PSFCH transmission, S-SSB transmission, etc. may be supported on a UCell.

Unless otherwise noted, the definitions below are applicable to the following terminologies used in the present disclosure.
- Channel: a carrier or a part of a carrier composed of a contiguous set of RBs in which a channel access procedure is performed in a shared spectrum.
- Channel access procedure (CAP): a procedure of assessing channel availability based on sensing before signal transmission in order to determine whether other communication node(s) are using a channel. A basic sensing unit is a sensing slot with a duration of Tₛₗ = 9 us. The base station or the UE senses a channel during a sensing slot duration. If power detected for at least 4 us within the sensing slot duration is less than an energy detection threshold Xₜₕᵣₑₛₕ, the sensing slot duration Tₛₗ is considered to be idle. Otherwise, the sensing slot duration Tₛₗ = 9 us is considered to be busy. CAP may also be referred to as listen before talk (LBT).
- Channel occupancy: transmission(s) on channel(s) by the base station/UE after a channel access procedure.
- Channel occupancy time (COT): a total time during which the base station/UE and any base station/UE(s) sharing channel occupancy can perform transmission(s) on a channel after the base station/UE perform a channel access procedure. In the case of determining COT, if a transmission gap is less than or equal to 25 us, the gap duration may be counted in the COT. The COT may be shared for transmission between the base station and corresponding UE(s).
- DL transmission burst: a set of transmissions without any gap greater than 16 us from the base station. Transmissions from the base station, which are separated by a gap exceeding 16 us are considered as separate DL transmission bursts. The base station may perform transmission(s) after a gap without sensing channel availability within a DL transmission burst.
- UL or SL transmission burst: a set of transmissions without any gap greater than 16 us from the UE. Transmissions from the UE, which are separated by a gap exceeding 16 us are considered as separate UL or SL transmission bursts. The UE may perform transmission(s) after a gap without sensing channel availability within a UL or SL transmission burst.
- Discovery burst: a DL transmission burst including a set of signal(s) and/or channel(s) confined within a window and associated with a duty cycle. In the LTE-based system, the discovery burst may be transmission(s) initiated by the base station, which includes PSS, an SSS, and cell-specific RS (CRS) and further includes non-zero power CSI-RS. In the NR-based system, the discover burst may be transmission(s) initiated by the base station, which includes at least an SS/PBCH block and further includes CORESET for a PDCCH scheduling a PDSCH carrying SIB1, the PDSCH carrying SIB1, and/or non-zero power CSI-RS.

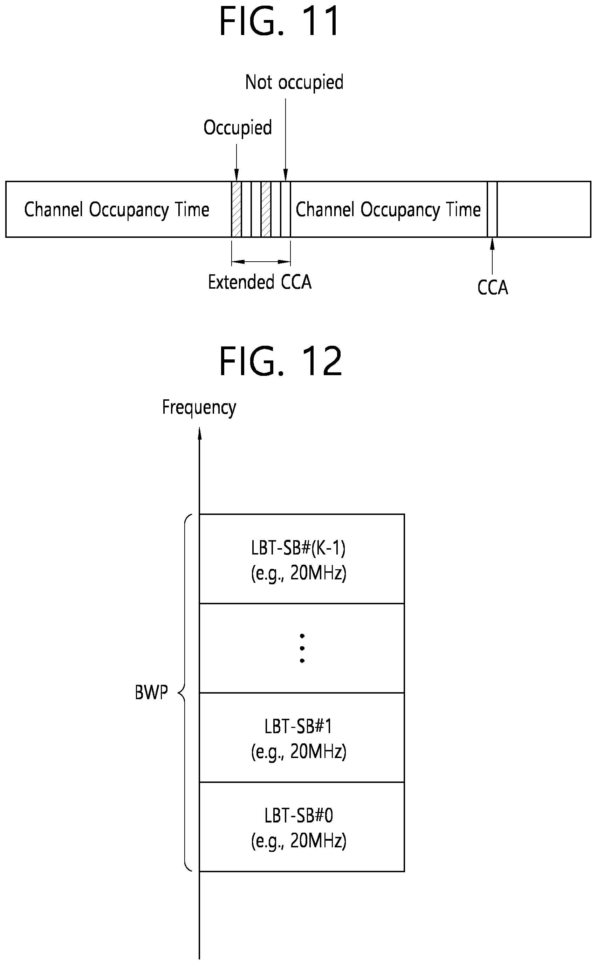

FIG. 11 shows a method of occupying resources in an unlicensed band, based on an embodiment of the present disclosure. The embodiment of FIG. 11 may be combined with various embodiments of the present disclosure.

Referring to FIG. 11, a communication node (e.g., base station, UE) within an unlicensed band should determine whether other communication node(s) is using a channel before signal transmission. To this end, the communication node within the unlicensed band may perform a channel access procedure (CAP) to access channel(s) on which transmission(s) is performed. The channel access procedure may be performed based on sensing. For example, the communication node may perform carrier sensing (CS) before transmitting signals so as to check whether other communication node(s) perform signal transmission. When the other communication node(s) perform no signal transmission, it is the that clear channel assessment (CCA) is confirmed. If a CCA threshold (e.g., X_{Thresh}) is predefined or configured by a higher layer (e.g., RRC), the communication node may determine that the channel is busy if the detected channel energy is higher than the CCA threshold. Otherwise, the communication node may determine that the channel is idle. If it is determined that the channel is idle, the communication node may start the signal transmission in the unlicensed band. The CAP may be replaced with the LBT.

Table 8 shows an example of the channel access procedure (CAP) supported in NR-U.

**[Table 8]**

| | Type | Explanation |
|---|---|---|
| DL | | CAP with random back-off |
| | Type 1 CAP | - time duration spanned by the sensing slots that are sensed to be idle before a downlink transmission(s) is random |
| | Type 2 CAP | CAP without random back-off |
| | - Type 2A, 2B, 2C | - time duration spanned by sensing slots that are sensed to be idle before a downlink transmission(s) is deterministic |
| UL or SL | Type 1 CAP | CAP with random back-off |
| | | - time duration spanned by the sensing slots that are sensed to be idle before an uplink or sidelink transmission(s) is random |
| | Type 2 CAP | CAP without random back-off |
| | - Type 2A, 2B, 2C | - time duration spanned by sensing slots that are sensed to be idle before an uplink or sidelink transmission(s) is deterministic |

Referring to Table 8, the LBT type or CAP for DL/UL/SL transmission may be defined. However, Table 8 is only an example, and a new type or CAP may be defined in a similar manner. For example, the type 1 (also referred to as Cat-4 LBT) may be a random back-off based channel access procedure. For example, in the case of Cat-4, the contention window may change. For example, the type 2 can be performed in case of COT sharing within COT acquired by the base station (gNB) or the UE.

Hereinafter, LBT-SubBand (SB) (or RB set) will be described.

In a wireless communication system supporting an unlicensed band, one cell (or carrier (e.g., CC)) or BWP configured for the UE may have a wideband having a larger bandwidth (BW) than in legacy LTE. However, a BW requiring CCA based on an independent LBT operation may be limited according to regulations. Let a subband (SB) in which LBT is individually performed be defined as an LBT-SB. Then, a plurality of LBT-SBs may be included in one wideband cell/BWP. A set of RBs included in an LBT-SB may be configured by higher-layer (e.g., RRC) signaling. Accordingly, one or more LBT-SBs may be included in one cell/BWP based on (i) the BW of the cell/BWP and (ii) RB set allocation information.

FIG. 12 shows a case in which a plurality of LBT-SBs are included in an unlicensed band, based on an embodiment of the present disclosure. The embodiment of FIG. 12 may be combined with various embodiments of the present disclosure.

Referring to FIG. 12, a plurality of LBT-SBs may be included in the BWP of a cell (or carrier). An LBT-SB may have, for example, a 20-MHz band. The LBT-SB may include a plurality of contiguous (P)RBs in the frequency domain, and thus may be referred to as a (P)RB set. While not shown, a guard band (GB) may be interposed between LBT-SBs. Accordingly, the BWP may be configured in the form of {LBT-SB #0 (RB set #0)+GB #0+LBT-SB #1 (RB set #1+GB #1) + ... +LBT-SB #(K-1) (RB set (#K-1))}. For convenience, LBT-SB/RB indexes may be configured/defined in an increasing order from the lowest frequency to the highest frequency.

Hereinafter, a channel access priority class (CAPC) will be described.

The CAPCs of MAC CEs and radio bearers may be fixed or configured to operate in FR1:
- Fixed to lowest priority for padding buffer status report (BSR) and recommended bit rate MAC CE;
- Fixed to highest priority for SRB0, SRB1, SRB3 and other MAC CEs;
- Configured by the base station for SRB2 and DRB.

When selecting a CAPC of a DRB, the base station considers fairness between other traffic types and transmissions while considering 5QI of all QoS flows multiplexed to the corresponding DRB. Table 9 shows which CAPC should be used for standardized 5QI, that is, a CAPC to be used for a given QoS flow. For standardized 5QI, CAPCs are defined as shown in the table below, and for non-standardized 5QI, the CAPC with the best QoS characteristics should be used.

**[Table 9]**

| CAPC | 5QI |
|---|---|
| 1 | 1, 3, 5, 65, 66, 67, 69, 70, 79, 80, 82, 83, 84, 85 |
| 2 | 2, 7, 71 |
| 3 | 4, 6, 8, 9, 72, 73, 74, 76 |
| 4 | - |
| NOTE: A lower CAPC value indicates a higher priority. | |

Hereinafter, a method of transmitting a downlink signal through an unlicensed band will be described. For example, a method of transmitting a downlink signal through an unlicensed band may be applied to a method of transmitting a sidelink signal through an unlicensed band.

The base station may perform one of the following channel access procedures (e.g., CAP) for downlink signal transmission in an unlicensed band.

### (1) Type 1 downlink (DL) CAP Method

In the type 1 DL CAP, the length of a time duration spanned by sensing slots sensed to be idle before transmission(s) may be random. The type 1 DL CAP may be applied to the following transmissions:
- Transmission(s) initiated by the base station including (i) a unicast PDSCH with user plane data or (ii) the unicast PDSCH with user plane data and a unicast PDCCH scheduling user plane data, or
- Transmission(s) initiated by the base station including (i) a discovery burst only or (ii) a discovery burst multiplexed with non-unicast information.

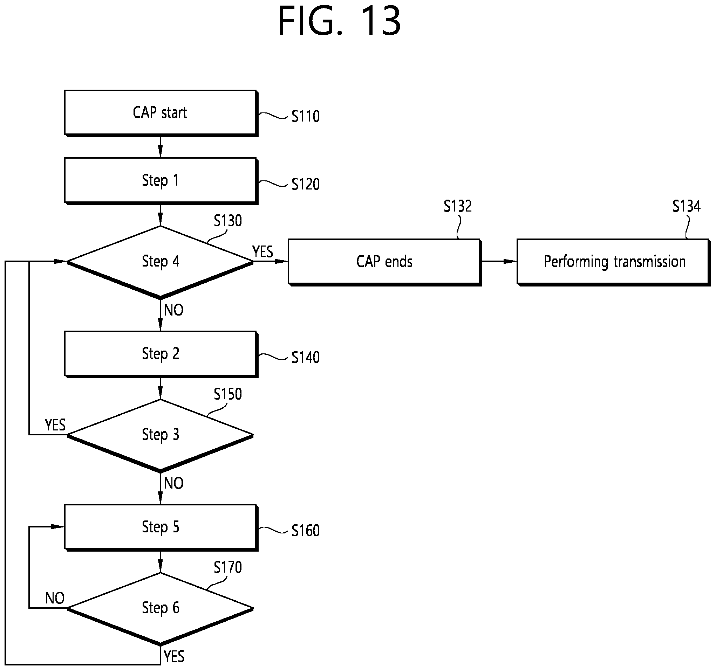

FIG. 13 shows CAP operations performed by a base station to transmit a downlink signal through an unlicensed band, based on an embodiment of the present disclosure. The embodiment of FIG. 13 may be combined with various embodiments of the present disclosure.

Referring to FIG. 13, the base station may sense whether a channel is idle for sensing slot durations of a defer duration T_{d}. Then, if a counter N is zero, the base station may perform transmission (S134). In this case, the base station may adjust the counter N by sensing the channel for additional sensing slot duration(s) according to the following steps:
Step 1) (S120) The base station sets N to Nᵢₙᵢₜ (N= Nᵢₙᵢₜ), where Nᵢₙᵢₜ is a random number uniformly distributed between 0 and CWₚ. Then, step 4 proceeds.
Step 2) (S140) If N>0 and the base station determines to decrease the counter, the base station sets N to N-1 (N=N-1).
Step 3) (S150) The base station senses the channel for the additional sensing slot duration. If the additional sensing slot duration is idle (Y), step 4 proceeds. Otherwise (N), step 5 proceeds.
Step 4) (S130) If N=0 (Y), the base station terminates the CAP (S132). Otherwise (N), step 2 proceeds.
Step 5) (S160) The base station senses the channel until either a busy sensing slot is detected within an additional defer duration T_{d} or all the slots of the additional defer duration T_{d} are detected to be idle.
Step 6) (S170) If the channel is sensed to be idle for all the slot durations of the additional defer duration T_{d} (Y), step 4 proceeds. Otherwise (N), step 5 proceeds.

Table 10 shows that mₚ, a minimum contention window (CW), a maximum CW, a maximum channel occupancy time (MCOT), and an allowed CW size, which are applied to the CAP, vary depending on channel access priority classes.

**[Table 10]**

| Channel Access Priority Class (p) | mₚ | CW_{min,p} | CW_{max,p} | T_{mcot,p} | allowed CWₚ sizes |
|---|---|---|---|---|---|
| 1 | 1 | 3 | 7 | 2ms | {3,7} |
| 2 | 1 | 7 | 15 | 3ms | {7,15} |
| 3 | 3 | 15 | 63 | 8 or 10 ms | {15,31,63} |
| 4 | 7 | 15 | 1023 | 8 or 10 ms | {15,31,63,127,255,511,1023} |

Referring to Table 10, a contention window size (CWS), a maximum COT value, etc. for each CAPC may be defined. For example, T_{d} may be equal to T_{f}+ mₚ * Tₛₗ (T_{d} = T_{f}+ mₚ * Tₛₗ).

The defer duration T_{d} is configured in the following order: duration T_{f}(16 us) + mₚ consecutive sensing slot durations Tₛₗ (9 us). T_{f} includes the sensing slot duration Tₛₗ at the beginning of the 16 us duration.

The following relationship is satisfied: CW_{min,p} <= CWₚ <= CW_{max,p}. CWₚ may be configured by CWₚ = CW_{min,p} and updated before step 1 based on HARQ-ACK feedback (e.g., the ratio of ACK or NACK) for a previous DL burst (e.g., PDSCH) (CW size update). For example, CWₚ may be initialized to CW_{min,p} based on the HARQ-ACK feedback for the previous DL burst. Alternatively, CWₚ may be increased to the next higher allowed value or maintained as it is.

### (2) Type 2 downlink (DL) CAP Method

In the type 2 DL CAP, the length of a time duration spanned by sensing slots sensed to be idle before transmission(s) may be determined. The type 2 DL CAP is classified into type 2A/2B/2C DL CAPs.

The type 2A DL CAP may be applied to the following transmissions. In the type 2A DL CAP, the base station may perform transmission immediately after the channel is sensed to be idle at least for a sensing duration T_{short_dl} = 25 us. Herein, T_{short_dl} includes the duration T_{f}(=16 us) and one sensing slot duration immediately after the duration T_{f}, where the duration T_{f} includes a sensing slot at the beginning thereof.
- Transmission(s) initiated by the base station including (i) a discovery burst only or (ii) a discovery burst multiplexed with non-unicast information, or
- Transmission(s) by the base station after a gap of 25 us from transmission(s) by the UE within a shared channel occupancy.

The type 2B DL CAP is applicable to transmission(s) performed by the base station after a gap of 16 us from transmission(s) by the UE within a shared channel occupancy time. In the type 2B DL CAP, the base station may perform transmission immediately after the channel is sensed to be idle for T_{f} = 16 us. T_{f} includes a sensing slot within 9 us from the end of the duration. The type 2C DL CAP is applicable to transmission(s) performed by the base station after a maximum of 16 us from transmission(s) by the UE within the shared channel occupancy time. In the type 2C DL CAP, the base station does not perform channel sensing before performing transmission.

Hereinafter, a method of transmitting an uplink signal through an unlicensed band will be described. For example, a method of transmitting an uplink signal through an unlicensed band may be applied to a method of transmitting a sidelink signal through an unlicensed band.

The UE may perform type 1 or type 2 CAP for UL signal transmission in an unlicensed band. In general, the UE may perform the CAP (e.g., type 1 or type 2) configured by the base station for UL signal transmission. For example, a UL grant scheduling PUSCH transmission (e.g., DCI formats 0_0 and 0_1) may include CAP type indication information for the UE.

### (1) Type 1 uplink (UL) CAP Method

In the type 1 UL CAP, the length of a time duration spanned by sensing slots sensed to be idle before transmission(s) is random. The type 1 UL CAP may be applied to the following transmissions.
- PUSCH/SRS transmission(s) scheduled and/or configured by the base station
- PUCCH transmission(s) scheduled and/or configured by the base station
- Transmission(s) related to a random access procedure (RAP)

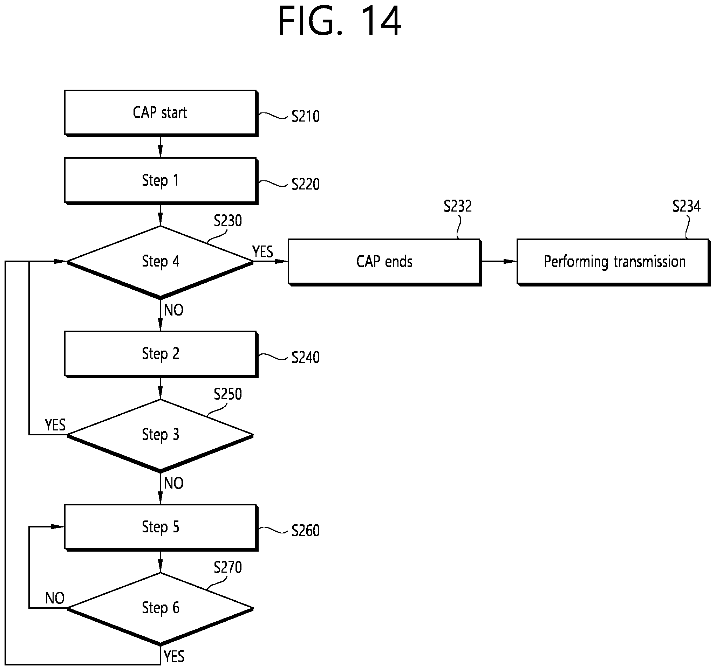

FIG. 14 shows type 1 CAP operations performed by a UE to transmit an uplink signal, based on an embodiment of the present disclosure. The embodiment of FIG. 14 may be combined with various embodiments of the present disclosure.

Referring to FIG. 14, the UE may sense whether a channel is idle for sensing slot durations of a defer duration T_{d}. Then, if a counter N is zero, the UE may perform transmission (S234). In this case, the UE may adjust the counter N by sensing the channel for additional sensing slot duration(s) according to the following steps:
Step 1) (S220) The UE sets N to Nᵢₙᵢₜ (N = Nᵢₙᵢₜ), where Nᵢₙᵢₜ is a random number uniformly distributed between 0 and CWₚ Then, step 4 proceeds.
Step 2) (S240) If N>0 and the UE determines to decrease the counter, the UE sets N to N-1 (N = N-1).
Step 3) (S250) The UE senses the channel for the additional sensing slot duration. If the additional sensing slot duration is idle (Y), step 4 proceeds. Otherwise (N), step 5 proceeds.
Step 4) (S230) If N=0 (Y), the UE terminates the CAP (S232). Otherwise (N), step 2 proceeds.
Step 5) (S260) The UE senses the channel until either a busy sensing slot is detected within an additional defer duration T_{d} or all the slots of the additional defer duration T_{d} are detected to be idle.
Step 6) (S270) If the channel is sensed to be idle for all the slot durations of the additional defer duration T_{d} (Y), step 4 proceeds. Otherwise (N), step 5 proceeds.

Table 11 shows that mₚ, a minimum CW, a maximum CW, a maximum channel occupancy time (MCOT), and an allowed CW size, which are applied to the CAP, vary depending on channel access priority classes.

**[Table 11]**

| Channel Access Priority Class (p) | mₚ | CW_{min,p} | CW_{max,p} | T_{ulmcot,p} | allowed CWₚ sizes |
|---|---|---|---|---|---|
| 1 | 2 | 3 | 7 | 2ms | {3,7} |
| 2 | 2 | 7 | 15 | 4ms | {7,15} |
| 3 | 3 | 15 | 1023 | 6 or 10 ms | {15,31,63,127,255,511,1023} |
| 4 | 7 | 15 | 1023 | 6 or 10 ms | {15,31,63,127,255,511,1023} |

Referring to Table 11, a contention window size (CWS), a maximum COT value, etc. for each CAPC may be defined. For example, T_{d} may be equal to T_{f}+ mₚ * Tₛₗ (T_{d} = T_{f}+ mₚ * Tₛₗ).

The defer duration T_{d} is configured in the following order: duration T_{f}(16 us) + mₚ consecutive sensing slot durations Tₛₗ (9 us). T_{f} includes the sensing slot duration Tₛₗ at the beginning of the 16 us duration.

The following relationship is satisfied: CW_{min,p} <= CWₚ <= CW_{max,p}. CWₚ may be configured by CWₚ = CW_{min,p} and updated before step 1 based on an explicit/implicit reception response for a previous UL burst (e.g., PUSCH) (CW size update). For example, CWₚ may be initialized to CW_{min,p} based on the explicit/implicit reception response for the previous UL burst. Alternatively, CWₚ may be increased to the next higher allowed value or maintained as it is.

### (2) Type 2 uplink (UL) CAP Method

In the type 2 UL CAP, the length of a time duration spanned by sensing slots sensed to be idle before transmission(s) may be determined. The type 2 UL CAP is classified into type 2A/2B/2C UL CAPs. In the type 2A UL CAP, the UE may perform transmission immediately after the channel is sensed to be idle at least for a sensing duration T_{short_dl} = 25 us. Herein, T_{short_dl} includes the duration T_{f} (=16 us) and one sensing slot duration immediately after the duration T_{f}. In the type 2A UL CAP, T_{f} includes a sensing slot at the beginning thereof. In the type 2B UL CAP, the UE may perform transmission immediately after the channel is sensed to be idle for the sensing duration T_{f} = 16 us. In the type 2B UL CAP, T_{f} includes a sensing slot within 9 us from the end of the duration. In the type 2C UL CAP, the UE does not perform channel sensing before performing transmission.

For example, according to the type 1 LBT-based NR-U operation, the UE having uplink data to be transmitted may select a CAPC mapped to 5QI of data, and the UE may perform the NR-U operation by applying parameters of the corresponding CACP (e.g., minimum contention window size, maximum contention window size, mₚ, etc.). For example, the UE may select a backoff counter (BC) after selecting a random value between the minimum CW and the maximum CW mapped to the CAPC. In this case, for example, the BC may be a positive integer less than or equal to the random value. The UE sensing a channel decreases the BC by 1 if the channel is idle. If the BC becomes zero and the UE detects that the channel is idle for the time T_{d} (T_{d} = T_{f}+ mₚ * Tₛₗ), the UE may attempt to transmit data by occupying the channel. For example, Tₛₗ (= 9 usec) is a basic sensing unit or sensing slots, and may include a measurement duration for at least 4 usec. For example, the front 9 usec of T_{f}(=16 usec) may be configured to be Tₛₗ.

For example, according to the type 2 LBT-based NR-U operation, the UE may transmit data by performing the type 2 LBT (e.g., type 2A LBT, type 2B LBT, or type 2C LBT) within COT.

For example, the type 2A (also referred to as Cat-2 LBT (one shot LBT) or one-shot LBT) may be 25 usec one-shot LBT. In this case, transmission may start immediately after idle sensing for at least a 25 usec gap. The type 2A may be used to initiate transmission of SSB and non-unicast DL information. That is, the UE may sense a channel for 25 usec within COT, and if the channel is idle, the UE may attempt to transmit data by occupying the channel.

For example, the type 2B may be 16 usec one-shot LBT. In this case, transmission may start immediately after idle sensing for a 16 usec gap. That is, the UE may sense a channel for 16 usec within COT, and if the channel is idle, the UE may attempt to transmit data by occupying the channel.

For example, in the case of the type 2C (also referred to as Cat-1 LBT or No LBT), LBT may not be performed. In this case, transmission may start immediately after a gap of up to 16 usec and a channel may not be sensed before the transmission. The duration of the transmission may be up to 584 usec. The UE may attempt transmission after 16 usec without sensing, and the UE may perform transmission for up to 584 usec.

In a sidelink unlicensed band, the UE may perform a channel access operation based on Listen Before Talk (LBT). Before the UE accesses a channel in an unlicensed band, the UE should check whether the channel to be accessed is idle (e.g., a state in which UEs do not occupy the channel, a state in which UEs can access the corresponding channel and transmit data) or busy (e.g., a state in which the channel is occupied and data transmission/reception is performed on the corresponding channel, and the UE attempting to access the channel cannot transmit data while the channel is busy). That is, the operation in which the UE checks whether the channel is idle or busy may be referred to as Clear Channel Assessment (CCA), and the UE may check whether the channel is idle or busy for the CCA duration.

Meanwhile, in a future system, a UE may perform a sidelink transmission and/or reception operation in an unlicensed band. For operations in an unlicensed band, depending on band-specific regulations or requirements, a UE's transmission may be preceded by a channel sensing operation (e.g., energy detection/measurement) for the channel to be used, a UE may perform a transmission in the unlicensed band only if, as a result of the channel sensing, the channel or RB set to be used is determined to be IDLE (e.g., if the measured energy is less than or equal to or greater than a certain threshold value), and, if, according to a result of the channel sensing, the channel or RB set to be used is determined to be BUSY (e.g., if the measured energy is greater than or equal to or greater than a certain threshold value), the UE may cancel all or part of the transmission in the unlicensed band.

Meanwhile, in operation in an unlicensed band, a UE may omit or simplify the channel sensing operation (i.e., make the channel sensing interval relatively small) within a certain time interval after a transmission for a certain time period, or conversely, after a certain time interval after the transmission, the UE may decide whether to transmit or not after performing the usual channel sensing operation.

On the other hand, in a transmission in an unlicensed band, depending on regulations or requirements, the size and/or power spectral density (PSD) of the time interval and/or frequency occupied region of the signal/channel transmitted by the UE may be greater than or equal to a certain level, respectively.

On the other hand, in an unlicensed band, in order to simplify the channel sensing, it may be informed through the channel occupancy time (COT) duration information that it occupies the channel obtained through the initial general channel sensing for a certain period of time, and the maximum value of the length of the COT duration may be set differently according to the priority value of a service or a data packet.

On the one hand, a base station may share a COT duration that it has obtained through channel sensing in the form of a DCI transmission, and a UE may perform a specific (indicated) channel sensing type and/or CP extension within the COT duration according to the DCI information received from the base station. On the other hand, a UE may share the COT duration that it has obtained through channel sensing back to the base station that is the destination of the UE's UL transmission, and the relevant information may be provided via UL via CG-UCI. In the above situation, a base station may perform simplified channel sensing within the COT duration shared by a UE.

Meanwhile, in the case of SL communication, there are situations where a UE is indicated by a base station to use a resource for an SL transmission through DCI or RRC signaling, such as Mode 1 RA operation, and there are situations where a UE performs an SL transmission and reception through sensing operation between UEs without an assistance from a base station, such as Mode 2 RA operation.

On the other hand, for channel access type 1, which can be used regardless of the channel occupancy time (COT) configuration, the procedures shown in Table 12 and Table 13 were performed for DL transmission, and the procedures shown in Table 14 and Table 15 were performed for UL transmission.

**[Table 12]**

| | |
|---|---|
| The eNB/gNB may transmit a transmission after first sensing the channel to be idle during the sensing slot durations of a defer duration *T_{d}* and after the counter *N* is zero in step 4. The counter N is adjusted by sensing the channel for additional sensing slot duration(s) according to the steps below: | |
| | 1) set *N* = *Nᵢₙᵢₜ*, where *Nᵢₙᵢₜ* is a random number uniformly distributed between 0 and *CWₚ,* and go to step 4; |
| | 2) if *N* > 0 and the eNB/gNB chooses to decrement the counter, set *N = N* - 1; |
| | 3) sense the channel for an additional sensing slot duration, and if the additional sensing slot duration is idle, go to step 4; else, go to step 5; |
| | 4) if *N* = 0, stop; else, go to step 2. |
| | 5) sense the channel until either a busy sensing slot is detected within an additional defer duration *T_{d}* or all the sensing slots of the additional defer duration *T_{d}* are detected to be idle; |
| | 6) if the channel is sensed to be idle during all the sensing slot durations of the additional defer duration *T_{d},* go to step 4; else, go to step 5; |
| If an eNB/gNB has not transmitted a transmission after step 4 in the procedure above, the eNB/gNB may transmit a transmission on the channel, if the channel is sensed to be idle at least in a sensing slot duration *Tₛₗ* when the eNB/gNB is ready to transmit and if the channel has been sensed to be idle during all the sensing slot durations of a defer duration *T_{d}* immediately before this transmission. If the channel has not been sensed to be idle in a sensing slot duration *Tₛₗ* when the eNB/gNB first senses the channel after it is ready to transmit or if the channel has been sensed to be not idle during any of the sensing slot durations of a defer duration *T_{d}* immediately before this intended transmission, the eNB/gNB proceeds to step 1 after sensing the channel to be idle during the sensing slot durations of a defer duration *T_{d}*. | |
| The defer duration *T_{d}* consists of duration *T_{f} =* 16us immediately followed by *mₚ* consecutive sensing slot durations *Tₛₗ,* and *T_{f}* includes an idle sensing slot duration *Tₛₗ* at start of *T_{f}*. | |

**[Table 13]**

| | | |
|---|---|---|
| If a gNB transmits transmissions including PDSCH that are associated with channel access priority class *p* on a channel, the gNB maintains the contention window value *CWₚ* and adjusts *CWₚ* before step 1 of the procedure described in clause 4.1.1 for those transmissions using the following steps: | | |
| | 1) For every priority class *p* ∈ {1,2,3,4}, set *CWₚ = CW_{min,p}*. | |
| | 2) If HARQ-ACK feedback is available after the last update of *Wₚ* , go to step 3. Otherwise, if the gNB transmission after procedure described in clause 4.1.1 does not include a retransmission or is transmitted within a duration *T_{w}* from the end of the *reference duration* corresponding to the earliest DL channel occupancy after the last update of *CWₚ,* go to step 5; otherwise go to step 4. | |
| | 3) The HARQ-ACK feedback(s) corresponding to PDSCH(s) in the reference duration for the latest DL channel occupancy for which HARQ-ACK feedback is available is used as follows: | |
| | | a. If at least one HARQ-ACK feedback is 'ACK' for PDSCH(s) with transport block based feedback or at least 10% of HARQ-ACK feedbacks is 'ACK' for PDSCH CBGs transmitted at least partially on the channel with code block group based feedback, go to step 1; otherwise go to step 4. |
| | 4) Increase *CWₚ* for every priority class *p* ∈ {1,2,3,4} to the next higher allowed value. | |
| | 5) For every priority class p ∈ {1,2,3,4}, maintain CWₚ as it is; go to step 2. | |
| The *reference duration* and duration *T_{w}* in the procedure above are defined as follows: | | |
| | - The *reference duration* corresponding to a channel occupancy initiated by the gNB including transmission of PDSCH(s) is defined in this clause as a duration starting from the beginning of the channel occupancy until the end of the first slot where at least one unicast PDSCH is transmitted over all the resources allocated for the PDSCH, or until the end of the first transmission burst by the gNB that contains unicast PDSCH(s) transmitted over all the resources allocated for the PDSCH, whichever occurs earlier. If the channel occupancy includes a unicast PDSCH, but it does not include any unicast PDSCH transmitted over all the resources allocated for that PDSCH, then, the duration of the first transmission burst by the gNB within the channel occupancy that contains unicast PDSCH(s) is the *reference duration* for CWS adjustment. | |
| | - *T_{W}* = *max*(*T_{A}*,*T_{B} +* 1ms) where *T_{B}* is the duration of the transmission burst from start of the *reference duration* in ms and *T_{A}* = 5ms if the absence of any other technology sharing the channel can not be guaranteed on a long-term basis (e.g. by level of regulation), and *T_{A}* = *10ms* otherwise. | |
| If a gNB transmits transmissions using Type 1 channel access procedures associated with the channel access priority class p on a channel and the transmissions are not associated with explicit HARQ-ACK feedbacks by the corresponding UE(s), the gNB adjusts *CWₚ* before step 1 in the procedures described in subclase 4.1.1, using the latest *CWₚ* used for any DL transmissions on the channel using Type 1 channel access procedures associated with the channel access priority class *p.* If the corresponding channel access priority class *p* has not been used for any DL transmissions on the channel, *CWₚ = CW_{miη,p}* is used. | | |

**[Table 14]**

| | |
|---|---|
| A UE may transmit the transmission using Type 1 channel access procedure after first sensing the channel to be idle during the slot durations of a defer duration *T_{d},* and after the counter *N* is zero in step 4. The counter *N* is adjusted by sensing the channel for additional slot duration(s) according to the steps described below. | |
| | 1) set *N* = *Nᵢₙᵢₜ*, where *Nᵢₙᵢₜ* is a random number uniformly distributed between 0 and *CWₚ,* and go to step 4; |
| | 2) if *N* > 0 and the UE chooses to decrement the counter, set *N* = *N* - 1; |
| | 3) sense the channel for an additional slot duration, and if the additional slot duration is idle, go to step 4; else, go to step 5; |
| | 4) if *N* = 0, stop; else, go to step 2. |
| | 5) sense the channel until either a busy slot is detected within an additional defer duration *T_{d}* or all the slots of the additional defer duration *T_{d}* are detected to be idle; |
| | 6) if the channel is sensed to be idle during all the slot durations of the additional defer duration *T_{d},* go to step 4; else, go to step 5; |
| If a UE has not transmitted a UL transmission on a channel on which UL transmission(s) are performed after step 4 in the procedure above, the UE may transmit a transmission on the channel, if the channel is sensed to be idle at least in a sensing slot duration *Tₛₗ* when the UE is ready to transmit the transmission and if the channel has been sensed to be idle during all the slot durations of a defer duration *T_{d}* immediately before the transmission. If the channel has not been sensed to be idle in a sensing slot duration *Tₛₗ* when the UE first senses the channel after it is ready to transmit, or if the channel has not been sensed to be idle during any of the sensing slot durations of a defer duration *T_{d}* immediately before the intended transmission, the UE proceeds to step 1 after sensing the channel to be idle during the slot durations of a defer duration *T_{d}*. | |
| The defer duration *T_{d}* consists of duration *T_{f} =* 16us immediately followed by *mₚ* consecutive slot durations where each slot duration is *Tₛₗ* = 9us, and *T_{f}* includes an idle slot duration *Tₛₗ* at start of *T_{f}*. | |

**[Table 15]**

| | | |
|---|---|---|
| If a UE transmits transmissions using Type 1 channel access procedures that are associated with channel access priority class *p* on a channel, the UE maintains the contention window value *CWₚ* and adjusts *CWₚ* for those transmissions before step 1 of the procedure described in clause 4.2.1.1, using the following steps: | | |
| | 1) For every priority class *p* ∈ {1,2,3,4}, set *CWₚ = CW_{min,p}*; | |
| | 2) If HARQ-ACK feedback is available after the last update of *CWₚ,* go to step 3. Otherwise, if the UE transmission after procedure described in clause 4.2.1.1 does not include a retransmission or is transmitted within a duration *T_{w}* from the end of the *reference duration* corresponding to the earliest UL channel occupancy after the last update of *CWₚ,* go to step 5; otherwise go to step 4. | |
| | 3) The HARQ-ACK feedback(s) corresponding to PUSCH(s) in the *reference duration* for the latest UL channel occupancy for which HARQ-ACK feedback is available is used as follows: | |
| | | a. If at least one HARQ-ACK feedback is 'ACK' for PUSCH(s) with transport block (TB) based feedback or at least 10% of HARQ-ACK feedbacks are 'ACK' for PUSCH CBGs transmitted at least partially on the channel with code block group (CBG) based feedback, go to step 1; otherwise go to step 4. |
| | 4) Increase *CWₚ* for every priority class *p* ∈ {1,2,3,4} to the next higher allowed value; | |
| | 5) For every priority class *p* ∈ {1,2,3,4}, maintain *CWₚ* as it is; go to step 2. | |
| The HARQ-ACK feedback, *reference duration* and duration *T_{w}* in the procedure above are defined as the following: | | |
| | - For the purpose of contention window adjustment in this clause, HARQ-ACK feedback for PUSCH(s) transmissions are expected to be provided to UE(s) explicitly or implicitly where explicit HARQ-ACK is determined based on the valid HARQ-ACK feedback in a corresponding CG-DFI as described in clause 10.5 in [7], and implicit HARQ-ACK feedback is determined based on the indication for a new transmission or retransmission in the DCI scheduling PUSCH(s) as follows: | |
| | | - If a new transmission is indicated, 'ACK' is assumed for the transport blocks or code block groups in the corresponding PUSCH(s) for the TB-based and CBG-based transmission, respectively. |
| | | - If a retransmission is indicated for TB-based transmissions, 'NACK' is assumed for the transport blocks in the corresponding PUSCH(s). |
| | | - If a retransmission is indicated for CBG-based transmissions, if a bit value in the code block group transmission information (CBGTI) field is '0' or '1' as described in clause 5.1.7.2 in [8], 'ACK' or 'NACK' is assumed for the corresponding CBG in the corresponding PUSCH(s), respectively. |
| | - The *reference duration* corresponding to a channel occupancy initiated by the UE including transmission of PUSCH(s) is defined in this clause as a duration starting from the beginning of the channel occupancy until the end of the first slot where at least one PUSCH is transmitted over all the resources allocated for the PUSCH, or until the end of the first transmission burst by the UE that contains PUSCH(s) transmitted over all the resources allocated for the PUSCH, whichever occurs earlier. If the channel occupancy includes a PUSCH, but it does not include any PUSCH transmitted over all the resources allocated for that PUSCH, then, the duration of the first transmission burst by the UE within the channel occupancy that contains PUSCH(s) is the *reference duration* for CWS adjustment. | |
| | | - *T_{w}* = max(*T_{A}*,*T_{B} +* 1ms) where *T_{B}* is the duration of the transmission burst from start of the *reference duration* in ms and *T_{A}* = 5ms if the absence of any other technology sharing the channel cannot be guaranteed on a long-term basis (e.g. by level of regulation), and *T_{A}* = 10ms otherwise. |

Meanwhile, within a channel occupancy time (COT), a channel access type 2, which is simplified, could be used before transmission, in the case of DL transmission, the procedure shown in Table 16, and in the case of UL transmission, the procedure shown in Table 17 are performed.

**[Table 16]**

| | |
|---|---|
| 4.1.2 Type 2 DL channel access procedures | |
| This clause describes channel access procedures to be performed by an eNB/gNB where the time duration spanned by sensing slots that are sensed to be idle before a downlink transmission(s) is deterministic. | |
| If an eNB performs Type 2 DL channel access procedures, it follows the procedures described in clause 4.1.2.1. | |
| Type 2A channel access procedures as described in clause 4.1.2.1 are only applicable to the following transmission(s) performed by an eNB/gNB: | |
| | - Transmission(s) initiated by an eNB including discovery burst and not including PDSCH where the transmission(s) duration is at most 1*ms*, or |
| | - Transmission(s) initiated by a gNB with only discovery burst or with discovery burst multiplexed with non-unicast information, where the transmission(s) duration is at most 1*ms*, and the discovery burst duty cycle is at most 1/20, or |
| | - Transmission(s) by an eNB/ gNB following transmission(s) by a UE after a gap of 25us in a shared channel occupancy as described in clause 4.1.3. |
| Type 2B or Type 2C DL channel access procedures as described in clause 4.1.2.2 and 4.1.2.3, respectively, are applicable to the transmission(s) performed by a gNB following transmission(s) by a UE after a gap of 16us or up to 16us, respectively, in a shared channel occupancy as described in clause 4.1.3. | |
| 4.1.2.1 Type 2A DL channel access procedures | |
| An if | eNB/gNB may transmit a DL transmission immediately after sensing the channel to be idle for at least a sensing interval *T_{short_dl}* = *25us. T_{short_dl}* consists of a duration *T_{f} =* 16us immediately followed by one sensing slot and *T_{f}* includes a sensing slot at start of *T_{f}*. The channel is considered to be idle for *T_{short)dl}* both sensing slots of *T_{short_dl}* are sensed to be idle. |
| 4.1.2.2 Type 2B DL channel access procedures | |
| A *T_{f}* idle | gNB may transmit a DL transmission immediately after sensing the channel to be idle within a duration of *= 16us. T_{f}* includes a sensing slot that occurs within the last 9us of *T_{f}*. The channel is considered to be within the duration *T_{f}* if the channel is sensed to be idle for a total of at least 5us with at least 4us of sensing occurring in the sensing slot. |
| 4.1.2.3 Type 2C DL channel access procedures | |
| When sense | a gNB follows the procedures in this clause for transmission of a DL transmission, the gNB does not the channel before transmission of the DL transmission. The duration of the corresponding DL transmission is at most 584us. |

**[Table 17]**

| |
|---|
| 4.2.1.2 Type 2 UL channel access procedure |
| This clause describes channel access procedures by UE where the time duration spanned by the sensing slots that are sensed to be idle before a UL transmission(s) is deterministic. If a UE is indicated by an eNB to perform Type 2 UL channel access procedures, the UE follows the procedures described in clause 4.2.1.2.1. |
| 4.2.1.2.1 Type 2A UL channel access procedure |
| If a UE is indicated to perform Type 2A UL channel access procedures, the UE uses Type 2A UL channel access procedures for a UL transmission. The UE may transmit the transmission immediately after sensing the channel to be idle for at least a sensing interval *T*_{short_ul} = 25us. *T*_{short_ul} consists of a duration *T_{f} =* 16usimmediately followed by one sensing slot and *T_{f}* includes a sensing slot at start of *T_{f}*. The channel is considered to be idle for *T*_{short_ul} if both sensing slots of *T*_{short_ul} are sensed to be idle. |
| 4.2.1.2.2 Type 2B UL channel access procedure |
| If a UE is indicated to perform Type 2B UL channel access procedures, the UE uses Type 2B UL channel access procedure for a UL transmission. The UE may transmit the transmission immediately after sensing the channel to be idle within a duration of *T_{f} =* 16*us. T_{f}* includes a sensing slot that occurs within the last 9us of *T_{f}*. The channel is considered to be idle within the duration *T_{f}* if the channel is sensed to be idle for total of at least 5us with at least 4us of sensing occurring in the sensing slot. |
| 4.2.1.2.3 Type 2C UL channel access procedure |
| If a UE is indicated to perform Type 2C UL channel access procedures for a UL transmission, the UE does not sense the channel before the transmission. The duration of the corresponding UL transmission is at most 584us. |

According to one embodiment of the present disclosure, a type 2A SL channel access may be in the same manner as a type 2A DL and/or UL channel access, and it may be in a form comprising a sensing interval of T_short_sl=25us and a T_f=16us interval immediately following the sensing interval comprising one sensing slot, with T_f comprising a sensing slot at the beginning. A scheme of DL or UL may also be used for basic idle determination.

According to one embodiment of the present disclosure, a Type 2B SL channel access may be in the same manner as a Type 2B DL and/or UL channel access, it may be in a form comprising a sensing interval of T_short_sl=25us and a T_f=16us interval immediately following the sensing interval comprising one sensing slot, with T_f comprising a sensing slot at the beginning. A scheme of DL or UL may also be used for basic idle determination.

According to one embodiment of the present disclosure, a Type 2C SL channel access may be in the same manner as a Type 2C DL and/or UL channel access, it may be in a form where no channel sensing is performed. Instead, the time interval of an SL transmission may be up to 584us.

According to one embodiment of the present disclosure, a type 1 SL channel access is performed in the same manner as a type 1 DL and/or UL channel access, after i) randomly deriving an integer value N based on a contention window size corresponding to the priority class, ii) if the channel sensing result for a defer duration of size T_d corresponding to the priority class is an idle, the counter value is decremented to N-1 if it is idle in units of T_sl; and iii) if the counter value is zero, a UE may occupy the RB set or channel subject to channel sensing.

However, if some of the channel sensing results for the above T_sl interval are determined to be busy, the channel sensing may be continued by maintaining the counter value until the channel sensing results for the defer duration of size T_d again become idle. In the above, the defer duration of length T_d may be in the form of m_p consecutive T_sl after T_f=16us, where m_p is a value determined according to the priority class p, and may be a time interval in which channel sensing is performed with T_sl=9us.

According to one embodiment of the present disclosure, when a UE has occupied a channel via a type 1 SL channel access and the UE is not ready to transmit a sidelink transmission, the UE may set a defer duration of length T_d and a sensing interval of length T_sl immediately preceding the ready-to-transmit sidelink transmission and, if both are idle, perform the sidelink transmission. Here, if any of them are busy, the UE may again perform type 1 SL channel access.

For example, if a sidelink transmission is not possible at the ending time point of channel sensing (e.g., if the ending time point of channel sensing is after the starting time point of a sidelink transmission), a UE may reselect the sidelink transmission resource. For example, a reselected resource may be selected considering the ending time point of channel sensing and/or the length of the remaining sensing interval. For example, the remaining sensing interval may be a value derived assuming that the channel sensing is all idle.

For example, in the type 1 SL channel access, the T_f value and/or the m_p value and/or the T_sl value may be (pre-)configured or pre-defined according to an SL priority value. For example, in the above Type 1 SL channel access, the T_f value and/or the m_p value and/or the m_sl value may be different when transmitting PSCCH/PSSCH and when transmitting PSFCH. For example, the T_f value and/or m_p value and/or T_sl value may be separately (pre-)configured in the Type 1 SL channel access for PSCCH/PSSCH transmission and PSFCH transmission, respectively.

On the other hand, in the case of a sidelink, an SL HARQ-ACK feedback may be disabled, and in the case of a specific SL HARQ-ACK feedback option, a NACK is transmitted only when TB decoding fails, and no SL HARQ-ACK feedback is transmitted when TB decoding succeeds. Accordingly, adjusting the size of the contention window for the sidelink communication may be performed differently from the DL or UL method.

For example, the initial value of the contention window size CW_p for all priority classes may be set to a pre-defined CW_min,p value.

For example, if a UE does not expect to receive SL HARQ-ACK feedback after the last update of the size of the contention window CW_p for priority class p and/or if there are only PSCCH/PSSCH transmissions with SL HARQ-ACK feedback disabled within the reference duration corresponding to the earliest SL channel occupancy after the last update of CW_p, the UE may maintain the value of CW_p for all or each priority class regardless of whether there are retransmissions or not for the same TB. For example, in the above, a PSCCH/PSSCH transmission with SL HARQ-ACK feedback disabled may be limited to cases where the cast type is broadcast or groupcast.

For example, if a UE does not expect to receive an SL HARQ-ACK feedback after the last update of the contention window size CW_p for priority class p, and/or if there are only PSCCH/PSSCH transmissions with SL HARQ-ACK feedback disabled within the reference interval corresponding to the earliest SL channel occupancy after the last update of CW_p, if no retransmissions are included within the reference interval and/or if they are transmitted within a certain time interval T_w from the end time point of the reference interval, CW_p may be maintained for all or each priority class, otherwise CW_p may be increased to the next allowed value for all or each priority class.

For example, the value of T_w may be a value that is (pre-)configured per resource pool and/or per SL priority value. For example, the value of T_w may be defined as max(T_A, T_B+1ms), where T_B is the interval length of the transmission burst from the start of the reference duration, and according to whether other RATs and/or other links are present or not, T_A may be 5 msec if not present and 10 msec if present.

For example, since the last update of the size CW_p of the contention window for priority class p, if a UE has an SL HARQ-ACK feedback for PSCCH/PSSCH with an SL HARQ-ACK feedback enabled within the reference duration where the UE has transmitted, if at least one SL HARQ-ACK is determined to be ACK, CW_p may be reset to the respective minimum value for all or each priority class, otherwise CW_p may be incremented to the respective next allowed value for all or each priority class. For example, a case where the SL HARQ-ACK is determined to be ACK may include a case where a UE does not detect a PSFCH in SL HARQ-ACK feedback Option 1 (NACK-ONLY method).

For example, if, since the last update of the size CW_p of the contention window for priority class p, a UE has an SL HARQ-ACK feedback for PSCCH/PSSCH with an SL HARQ-ACK feedback enabled within the reference duration where the UE has transmitted, if the ratio of SL HARQ-ACKs determined to be NACK is equal to or exceeds a certain threshold value, CW_p for all or each priority class may be increased to the respective next allowed value, otherwise CW_p may be reset to the respective minimum value for all or each priority class.

For example, if, since the last update of the size CW_p of the contention window for priority class p, a UE has an SL HARQ-ACK feedback for PSCCH/PSSCH with an SL HARQ-ACK feedback enabled within the reference duration where the UE has transmitted, if the ratio of SL HARQ-ACKs determined to be DTX is equal to or exceeds a certain threshold value, CW_p for all or each priority class may be increased to the respective next allowed value, otherwise CW_p may be reset to the respective minimum value for all or each priority class.

For example, if there is a PSSCH transmission for groupcast HARQ-ACK feedback option 1 (NACK-ONLY) within the reference duration, the contention window size may be changed based on NACK, otherwise the contention window size may be changed based on ACK or DTX. For example, the threshold value for the NACK or DTX may be (pre-)configured, or may be pre-defined as 90%, 80%, etc.

For example, after the last update of the contention window size CW_p for priority class p, if there is a PSCCH/PSSCH triggering an SL CSI report within the reference duration where the UE has transmitted, and if at least one SL CSI report is successfully received, CW_p may be reset to the respective minimum value for all or each priority class, and if no CSI report is detected within the latency bound for CSI reports, CW_p may be incremented to the respective next allowed value for all or each priority class.

On the other hand, a UE may also perform type 1 SL channel access when transmitting a PSFCH. For example, if a UE is indicated/configured to perform type 1 SL channel access for at least one PSFCH transmission when transmitting a plurality of PSFCHs within the same RB set, the UE may use type 1 SL channel access to determine whether to transmit the plurality of PSFCHs. This may be to prevent misinterpretation of channel sensing results by using type 1 SL channel access.

For example, when a UE is indicated/configured to perform type 2 class SL channel access for at least one PSFCH transmission when transmitting a plurality of PSFCHs within the same RB set, the UE may use type 2 class SL channel access to determine whether to transmit the plurality of PSFCHs. Certain PSFCH transmissions may already be included within a particular COT, and this may be for other transmissions to benefit from simplified channel sensing within the COT duration.

For example, when a UE transmits a plurality of PSFCHs within the same RB set, the contention window size corresponding to the lowest value priority class and/or SL priority value may be used for channel access. This may be for the purpose of securing the opportunity to transmit a PSFCH corresponding to important data.

For example, when a UE transmits a plurality of PSFCHs within the same RB set, the contention window size corresponding to the highest value priority class and/or SL priority value may be used for channel access.

For example, when a UE transmits a plurality of PSFCHs within the same RB set, the contention window size with the largest value may be used for channel access. This may be for the purpose of minimizing the impact of the PSFCH transmissions on other transmissions.

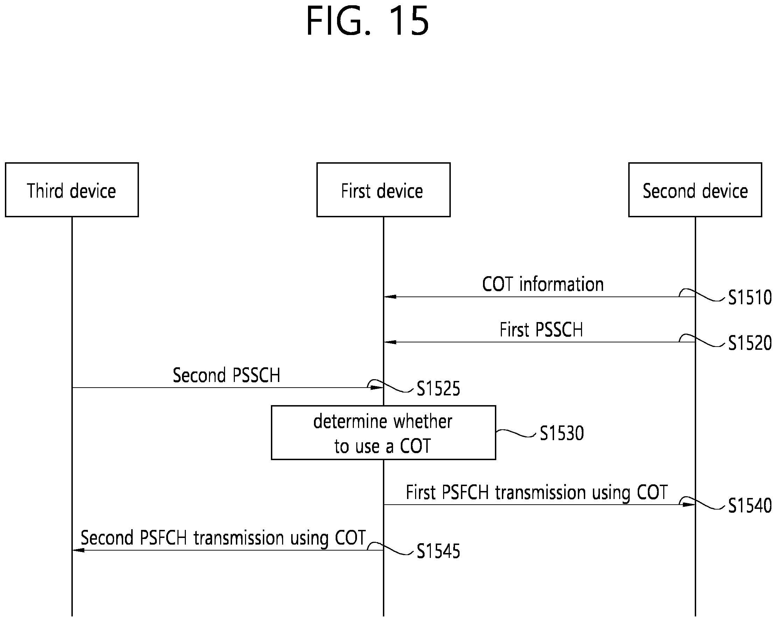

FIG. 15 shows a procedure in which a first device performs a transmission using COT for a plurality of PSFCHs, according to one embodiment of the present disclosure. FIG. 15 may be combined with various embodiments of the present disclosure.

Referring to FIG. 15, a first device in communication with a second device and a third device is shown. While the number of devices communicating with the first device in this embodiment is exemplified as two, the features of this embodiment may be extended to include a particular device communicating with three or more devices. For example, the communication performed in this embodiment may be performed in an unlicensed band.

In step S1510, a first device may receive information for a COT from a second device. In step S1520, the first device may receive a first PSSCH from the second device. In step S1525, the first device may receive a second PSSCH from a third device. That is, a transmission of a first PSFCH and a second PSFCH related to the first PSSCH and the second PSSCH may be pending at the first device.

In step S1530, the first device may determine whether to use the COT. For example, the first device may determine to use the COT for transmission of the first PSFCH and the second PSFCH, based on the first PFSCH being to be transmitted to the second device that has provided information about the COT. In other words, even though the third device has not provided information about the COT, based on a PSFCH transmission that is one of the pending PSFCH transmissions at the first device being scheduled to be transmitted to the second device that has provided the COT, the first device may determine to use the COT also for the transmission of a second PSFCH that is to be transmitted to the third device.

In step S1540, the first device may perform the first PSFCH transmission to the second device using the COT, as determined above. In step S1545, the first device may perform the second PSFCH transmission to the third device using the COT, as determined above. In this embodiment, the order of performing S1520 and S1525 may be unrelated to the order of their respective reference numbers. Further, in this embodiment, the order of performing S1540 and S1545 may not be related to the order of their respective reference numbers.

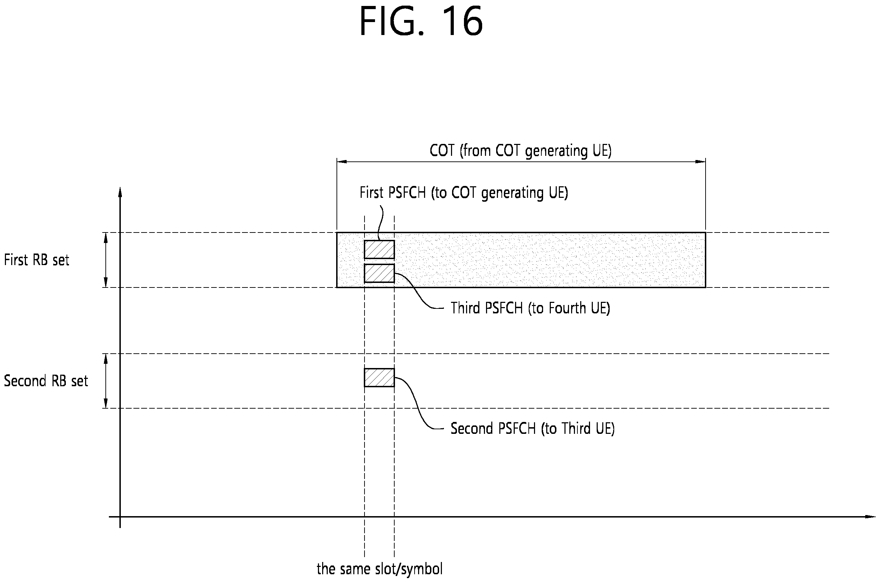

FIG. 16 shows an example of a PSFCH transmitting UE that has received a shared COT performing a PSFCH transmission based on the COT, according to one embodiment of the present disclosure. The embodiment of FIG. 16 may be combined with various embodiments of the present disclosure.

Referring to FIG. 16, a first RB set and a second RB set are shown. The first RB set may include a COT. For example, the COT may be received by a PSFCH transmitting UE from a COT generating UE. For example, the PSFCH transmitting UE may have received a first PSSCH, a second PSSCH, and a third PSSCH from the COT generating UE, a third UE, and a fourth UE, respectively. In other words, a first PSFCH, a second PSSCH, and a third PSFCH related respectively to the first PSSCH, the second PSSCH, and the third PSSCH may be pending at the PSFCH transmitting UE.

Here, for example, it is assumed that resources on which the first PSFCH and the third PSFCH are transmitted are included in a COT within the first RB set, and resources on which the second PSFCH is transmitted are included in the second RB set.

In this case, the PSFCH transmitting UE may use the COT for transmissions of all pending PSFCHs, based on the first PSFCH among the first PSFCH, the second PSFCH, and the third PSFCH being to be transmitted to the COT generating UE that provided information for the COT.

In other words, the PSFCH transmitting UE may transmit the first PSFCH to be transmitted to the COT generating UE that provided information for the COT, using the COT. And, for example, the PSFCH transmitting UE may use the COT for the transmission of the third PSFCH, which is to be transmitted in the same RB set as the first PSFCH, which is to be transmitted to the COT generating UE that provided information for the COT. And, for example, the PSFCH transmitting UE may use the COT for the transmission of the second PSFCH, which is to be transmitted in a different RB set than the first PSFCH, which is to be transmitted to the COT generating UE that provided information for the COT.

For example, when it is determined that, after the last update of the size CW_p of the contention window for the priority class p, SCI(s) for the source ID and/or destination ID and/or HARQ process number corresponding to the SL HARQ-ACK feedback(s) and/or PSFCH(s) within the reference duration where a UE has transmitted, have been received and detected, and the NDI of at least one of the received SCI(s) is determined to be toggled, then CW_p may be reset to the respective minimum value for all or each priority class, otherwise CW_p may be incremented to the respective next allowed value for all or each priority class.

For example, CW_p may be increased to each of the next allowed values for all or each priority class if, since the last update of the size CW_p of the contention window for priority class p, the SCI for the source ID and/or the destination ID and/or the HARQ process number corresponding to the PSFCH has not been received and/or detected within a reference duration determined based on a sidelink transmission (e.g., PSFCH) transmitted by the UE or within a certain time interval from the end time point of the PSFCH transmission by the UE. For example, the length of the specific time interval may be (pre-)configured per resource pool and/or per priority class and/or per SL priority value. For example, the length of the specific time interval may be determined differently depending on the priority class and/or SL priority value for a PSFCH.

According to one embodiment of the present disclosure, a source ID and/or a destination ID and/or a cast type and/or an SL HARQ-ACK feedback option and/or a HARQ process number referenced in the CW_p size adjustment may be limited to a specific range of values. For example, the specific range values may be (pre-)configured.

For example, in a PSFCH transmission using Type 1 SL channel access, the contention window size may be fixed to a specific value. For example, the specific value may be 3. For example, the specific value may be (pre-)configured per resource pool and/or per priority class and/or per SL priority value for a PSFCH. For example, the priority class value for a PSFCH may be the same as the priority value of a PSSCH corresponding to the PSFCH. For example, the priority class value for a PSFCH may be (pre-)configured or pre-defined per SL priority value for the PSFCH and/or per SL HARQ-ACK feedback option.

According to one embodiment of the present disclosure, whether or not the retransmission is performed may be determined based on different SCIs received by a UE, or may be determined from whether or not and where retransmission resources are reserved in SCIs previously received by the UE.

According to one embodiment of the present disclosure, a reference duration may be an interval from the starting time point of channel occupancy for a COT occupied by a UE (for sidelink communications) and/or a COT occupied by a base station (for sidelink communications) to the end time point of the first slot in which an actual specific sidelink transmission is performed for all allocated resources for sidelink transmissions. Alternatively, a reference duration may be an interval until the end time point of the first transmission burst that includes actual specific sidelink transmission for all allocated resources for sidelink transmissions, or until an earlier time point between the end time points.

For example, the specific sidelink transmission in the above may be a PSCCH/PSSCH transmission for unicast and/or groupcast and/or PSCCH/PSSCH with SL HARQ-ACK feedback enabled. For example, the length of the reference duration may be (pre-)configured per resource pool and/or per SL priority value of the SL transmission of the UE when the COT is initialized.

According to one embodiment of the present disclosure, a combination of the above may be used, differently according to whether the COT duration is initialized by a UE or a base station.

According to one embodiment of the present disclosure, the operation of adjusting the size of the contention window for a sidelink may be performed respectively per unicast session (group) and/or per cast type and/or per transmission priority value and/or per SL transmission with SL HARQ-ACK feedback enabled/disabled and/or per SL HARQ-ACK feedback option.

For example, the contention window size adjustment procedure may be performed respectively for when a first UE performs an SL transmission to a second UE and when a second UE performs an SL transmission to a third UE. For example, in the HARQ-ACK based contention window size adjustment, the HARQ-ACK may be limited to a specific cast type and/or for a specific unicast session.

According to one embodiment of the present disclosure, the operation to adjust the size of the contention window for a sidelink may be performed only based on a specific cast type (e.g., unicast or group cast) and/or a PSSCH with SL HARQ-ACK feedback enabled.

According to one embodiment of the present disclosure, the operation of resetting the value of CW_p to the respective minimum value may be applied by being replaced by an operation of decreasing the value of CW_p to the previous allowed value.

For example, the size of the contention window when performing a type 1 SL channel access may be (pre-)configured per priority class and/or per SL priority and/or per resource pool. For example, in any of the above cases, a UE may not perform any operation to separately adjust the size of the contention window.

For example, conditions under which a Type 2A channel access is used may include when a UE transmits a synchronization signal and/or PSBCH for an unlicensed band, and/or when a sidelink transmission interval is 1 msec or less in length, and/or when the sum of the transmission intervals within any 20 msec interval is 1 msec or less.

Embodiments of the disclosure may be applied in any combination of the above, depending on whether the transmission is within or outside the channel occupancy time (COT). Embodiments of the present disclosure may be applied in different combinations of the above depending on the shape of the COT (e.g., whether it is semi-static or time-varying). Embodiments of the present disclosure may be applied in different combinations of the above, depending on the carrier, depending on the presence or absence of guards between RB sets, or depending on regulations.

While the description in this disclosure describes changing the contention window size for all priority classes, the ideas in this disclosure may be extended and applied in the form that the contention window size is changed per specific priority class or SL priority value.

According to one embodiment of the present disclosure, the type 1 SL channel access and/or contention window size may be managed/maintained separately for PSCCH/PSSCH transmissions and PSFCH transmissions.

According to one embodiment of the present disclosure, the type 1 SL channel access and/or contention window size may be managed/maintained in common for PSCCH/PSSCH transmissions and PSFCH transmissions. For example, a contention window size determined on the basis of PSCCH/PSSCH transmissions may also be used for PSFCH transmissions.

On the other hand, a UE may perform PSCCH/PSSCH transmission or PSFCH transmission for a plurality of RB sets, in which case it is necessary to define how to perform channel access for each RB set.

For example, the channel access method for a plurality of channels or RB sets may be different when a UE transmits a single or a plurality of PSFCHs and when it transmits PSCCH/PSSCHs. For example, the channel access method for a plurality of RB sets when transmitting a PSFCH may be determined based on the priority class and/or SL priority value corresponding to the PSFCH and/or the CW_p value corresponding to a specific PSFCH, and/or the channel access method for a plurality of RB sets when transmitting a PSCCH/PSSCH may be determined independently of the priority class and/or SL priority value.

For example, if a UE performs a plurality of sidelink transmissions (e.g., PSFCH) based on type 1 SL channel access for a plurality of RB sets, the value of counter N when performing a type 1 SL channel access for each RB set may be determined independently for each RB set.

For example, if a UE performs a plurality of sidelink transmissions (e.g. PSFCH) based on type 1 SL channel access for a plurality of RB sets, the value of counter N determined when performing a type 1 SL channel access for the RB set with the largest CW_p value may be commonly applied to the value of counter N for the other RB sets.

For example, when a UE performs a plurality of sidelink transmissions (e.g. PSFCH) based on type 1 SL channel access for a plurality of RB sets, the value of counter N determined when performing a type 1 SL channel access for the RB set with the smallest representative SL priority value and/or representative priority class may be commonly applied to the counter N values for the other RB sets. In this way, transmission opportunities for higher priority PSFCHs may be secured slightly more.

For example, when a UE performs a plurality of sidelink transmissions (e.g. PSFCH) based on type 1 SL channel access for a plurality of RB sets, the value of counter N determined when performing a type 1 SL channel access for an RB set with the largest representative SL priority value and/or representative priority class may be commonly applied to the counter N values for the other RB sets. This may improve channel sensing accuracy for high priority PSFCH transmissions.

For example, when a UE performs a plurality of sidelink transmissions (e.g. PSFCH) based on type 1 SL channel access for a plurality of RB sets, the value of counter N determined when performing a type 1 SL channel access for an RB set related to HARQ-ACK feedback option 1 (NACK-ONLY) and/or NACK transmissions may be commonly applied to the value of counter N for the other RB sets. This allows NACK transmissions to be prioritized in the case of the HARQ-ACK feedback option 1 scheme.

For example, when a UE performs a plurality of sidelink transmissions (e.g., PSFCH) based on a type 1 SL channel access for a plurality of RB sets, the value of counter N determined when performing a type 1 SL channel access for an RB set with the largest number of simultaneously transmitted PSFCHs may be commonly applied to the value of counter N for the other RB sets. The basis for the above operation is that the transmission power for a specific RB set may become large as the number of simultaneous transmissions increases, and the threshold value for determining whether it is busy when performing channel sensing may be different according to the transmission power.

For example, when a UE performs a plurality of sidelink transmissions (e.g. PSFCH) based on a type 1 SL channel access for a plurality of RB sets, the value of counter N determined when performing a type 1 SL channel access for an RB set with the lowest number of simultaneously transmitted PSFCHs may be commonly applied to the value of counter N for the other RB sets.

For example, when a UE performs a plurality of sidelink transmissions (e.g., PSFCH) based on a type 1 SL channel access for a plurality of RB sets, the value of counter N determined when performing a type 1 SL channel access for an RB set for which the UE is scheduled to transmit and/or receive a sidelink after the PSFCH transmission may be commonly applied to the value of counter N for the other RB sets. For example, in the above, the time interval between the PSFCH transmission and the scheduled sidelink transmission and/or reception may be within a specific threshold value (e.g., 25us or 16us). For example, if a UE stops a sidelink transmission for an RB set for which the counter N value is determined, the UE may reset the N value for another RB set.

For example, when a UE performs a plurality of sidelink transmissions (e.g., PSFCH) based on type 1 SL channel access for a plurality of RB sets, a UE may randomly select an RB set to perform channel sensing based on type 1 SL channel access from among the transmission target RB sets to be transmitted. For example, the random selection may be performed such that the same RB set is not selected repeatedly within a specific time period (e.g., every 1 second).

For example, when a UE performs a plurality of sidelink transmissions (e.g., PSFCH) based on type 1 SL channel access for a plurality of RB sets, an RB set for which a UE performs channel sensing based on type 1 SL channel access may be the one with the largest representative SL priority value and/or representative priority class for PSFCH among the transmission target RB sets. For example, if there are multiple such target RB sets, one may be selected or randomly selected according to the UE implementation.

For example, when a UE performs a plurality of sidelink transmissions (e.g. PSFCH) based on type 1 SL channel access for a plurality of RB sets, an RB set for which a UE performs channel sensing based on a type 1 SL channel access may be the one with the smallest representative SL priority value and/or representative priority class for PSFCH among the transmission target RB sets.

For example, when a UE performs a plurality of sidelink transmissions (e.g. PSFCH) based on type 1 SL channel access for a plurality of RB sets, an RB set for which a UE performs channel sensing based on type 1 SL channel access may be the RB set with the highest number of simultaneously transmitted PSFCHs among the transmission target RB sets.

For example, when a UE performs a plurality of sidelink transmissions (e.g., PSFCHs) based on type 1 SL channel access for a plurality of RB sets, an RB set for which a UE performs channel sensing based on type 1 SL channel access may be an RB set with the least number of simultaneously transmitted PSFCHs among the transmission target RB sets. The basis for the above behavior is that, according to the number of PSFCHs transmitted simultaneously, the transmission power for a specific RB set may be different and, accordingly, the threshold value for determining whether it is busy when performing channel sensing may be different. For the above reasons, a tradeoff may occur between securing transmission opportunities and channel sensing accuracy.

For example, where a UE performs a plurality of sidelink transmissions (e.g., PSFCH) based on type 1 SL channel access for a plurality of RB sets, an RB set for which a UE performs channel sensing based on type 1 SL channel access may be an RB set for which a sidelink transmission and/or reception is scheduled after the PSFCH transmission. For example, the time interval between the PSFCH transmission and the scheduled sidelink transmission and/or reception may be within a certain threshold value (e.g., 25us or 16us). For example, a UE may perform simplified channel sensing (e.g., perform channel sensing within a fixed sensing interval (e.g., 25us)) for the transmission target RB set other than the RB set for which channel sensing is to be performed based on the above Type 1 SL channel access.

For example, when performing channel sensing based on type 1 SL channel access as described above, in calculating the CW_p value, the UE may change the way it calculates the CW_p value for each RB set to a way that it is extended and applied to all RB sets.

For example, when performing channel sensing based on type 1 SL channel access as described above, a UE may change to a method of determining the value of counter N based on the largest value among the CW_p values calculated for each RB set.

According to one embodiment of the present disclosure, the representative SL priority value and/or the representative priority class may be a minimum value and/or a maximum value and/or an average value for PSFCHs when a plurality of PSFCHs exist within an RB set.

According to one embodiment of the present disclosure, if the channel sensing result for a specific RB set is idle and otherwise busy, a UE may only transmit PSFCHs within and/or including the RB set that is idle. For example, transmitting PSFCHs for the some RB sets may be limited to cases where a guard region exists between RB sets. For example, if a guard region does not exist between the RB sets, a sidelink transmission (e.g., PSFCH) for a specific RB set of a UE may be possible if the channel sensing is idle for all RB sets and/or if all of the transmission target RB set and its neighboring RB sets are idle. For example, the neighboring RB sets may be one up and/or one down frequency-wise, or may be multiple RB sets. For example, the number of neighboring RB sets may vary depending on the number of RBs comprising the RB set and/or the subcarrier spacing and/or the channel frequency.

For example, when a UE performs a plurality of sidelink transmissions (e.g. PSCCH/PSSCH and/or S-SSB) based on type 1 SL channel access to a plurality of RB sets, the UE may randomly select from among the transmission target RB sets an RB set to perform channel sensing based on type 1 SL channel access.

For example, if a UE performs a plurality of sidelink transmissions (e.g. PSCCH/PSSCH and/or S-SSB) based on type 1 SL channel access for a plurality of RB sets, an RB set for which a UE is to perform channel sensing based on type 1 SL channel access may be an RB set to which PSCCH is mapped.

For example, when a UE performs a plurality of sidelink transmissions (e.g., PSCCH/PSSCH and/or S-SSB) based on type 1 SL channel access for a plurality of RB sets, an RB set to which a UE performs channel sensing based on type 1 SL channel access may be an RB set to which an SL HARQ-ACK feedback resource and/or PSFCH resource corresponding to PSCCH/PSSCH is to be mapped. This may be to share the COT duration obtained based on the type 1 SL channel access with the PSCCH/PSSCH receiving UE to enable simplified channel sensing for PSFCH transmission. For example, a UE may perform a type 1 SL channel access for the remaining transmission target RB sets or a type 2 class of SL channel access. For example, an operation where a UE performs type 2 class SL channel access may be limited to cases where the channel frequencies of the RB sets allocated for the sidelink transmission fall within a specific set of values.

According to one embodiment of the present disclosure, the channel access type and whether/method of indication described above may be applied differently for different SL channels. For example, for PSFCH transmissions, the channel access type indicated by the corresponding SCI may be used, and/or for PSCCH/PSSCH transmissions, the UE may use channel access type 1 or channel access type 2 class, according to whether the transmission is outside or inside the COT, etc.

According to one embodiment of the present disclosure, the channel access type and whether/how to indicate described above may be applied differently depending on the type of information an SL channel includes. For example, in the case of a PSSCH transmission that includes a CSI report, the channel access type that is indicated from the SCI that triggered the CSI report corresponding to the CSI report may be used.

The proposed method may be applied to the device described below. First, a processor 202 of a receiving UE may configure at least one BWP. Then, the processor 202 of the receiving UE may control a transceiver 206 of the receiving UE to receive a sidelink-related physical channel and/or a sidelink-related reference signal from a transmitting UE on the at least one BWP.

According to the prior art, an operation of SL communication in an unlicensed band was not defined, thus PSFCH transmission in an unlicensed band was not possible. In addition, since an operation for the COT duration required to perform seamless communication on an unlicensed band was not defined in SL, seamless SL communication on an unlicensed band was not possible.

According to embodiments of the present disclosure, for a plurality of PSFCH transmissions on an unlicensed band, if even one PSFCH transmission is transmitted to a COT shared UE, the COT duration for seamless communication may be used for all PSFCH transmissions, thereby enabling seamless PSFCH transmissions on an unlicensed band.

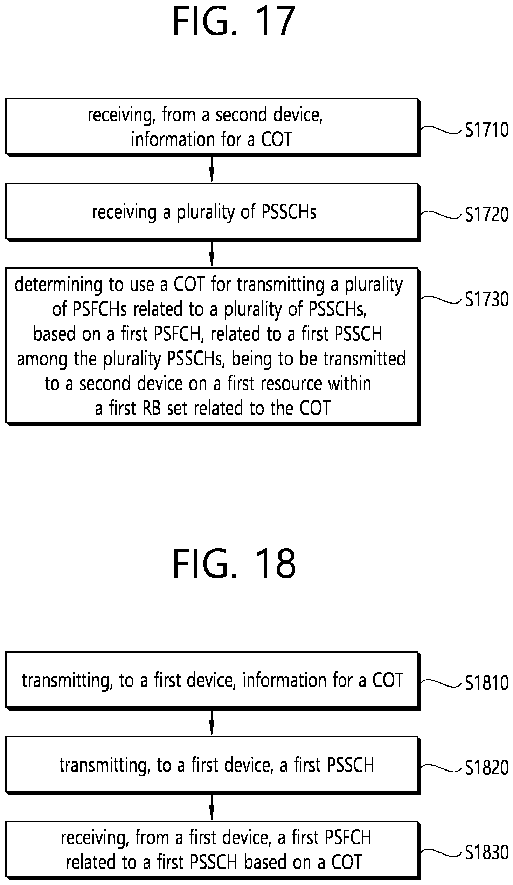

FIG. 17 shows a procedure for a first device to perform wireless communication, according to one embodiment of the present disclosure. The embodiment of FIG. 17 may be combined with various embodiments of the present disclosure.

Referring to FIG. 17, in step S1710, a first device may receive, from a second device, information for a channel occupancy time, COT. In step S1720, the first device may receive a plurality of physical sidelink shared channels, PSSCHs. In step S1730, the first device may determine to use the COT for transmitting a plurality of physical sidelink feedback channels, PSFCHs, related to the plurality of PSSCHs, based on a first PSFCH, related to a first PSSCH among the plurality PSSCHs, being to be transmitted to the second device on a first resource within a first resource block, RB, set related to the COT.

For example, the plurality of PSSCHs may be received from a plurality of devices including the second device.

For example, additionally, the first device may perform a transmission of the first PSFCH using the COT.

For example, performing the transmission of the first PSFCH using the COT may include: transmitting the first PSFCH on the first resource, based on a type 2 listen before talk, LBT, operation.

For example, the type 2 LBT operation may include: performing channel sensing from a time point before a starting time point of the first resource by a channel sensing interval, to the starting time point of the first resource.

For example, a length of the channel sensing interval may be determined based on a channel access priority class, CAPC, value related to the transmission of the first PSFCH.

For example, the CAPC value may be determined to be 1 based on the first PSFCH being a PSFCH.

For example, the channel sensing may include: measuring energy within the channel sensing interval.

For example, the first PSFCH may be transmitted based on a result of the type 2 LBT being IDLE.

For example, additionally, the first device may transmit a second PSFCH, related to a second PSSCH among the plurality of PSSCHs, using the COT on a second resource within the first RB set, based on the determination to use the COT.

For example, the second PSFCH may be transmitted to a third device.

For example, additionally, the first device may transmit a second PSFCH, related to a second PSSCH among the plurality of PSSCHs, using the COT on a second resource within a second RB set, based on the determination to use the COT.

For example, additionally, the first device may transmit a second PSFCH, related to a second PSSCH among the plurality of PSSCHs, using the COT on the first resource, based on the determination to use the COT.

The embodiments described above may be applied to various devices described below. First, a processor 102 of a first device 100 may control a transceiver 106 to receive, from a second device 200, information for a channel occupancy time, COT. And, the processor 102 of the first device 100 may control the transceiver 106 to receive a plurality of physical sidelink shared channels, PSSCHs. And, the processor 102 of the first device 100 may determine to use the COT for transmitting a plurality of physical sidelink feedback channels, PSFCHs, related to the plurality of PSSCHs, based on a first PSFCH, related to a first PSSCH among the plurality PSSCHs, being to be transmitted to the second device on a first resource within a first resource block, RB, set related to the COT.

According to an embodiment of the present disclosure, a first device performing wireless communication may be proposed. For example, the first device may comprise: at least one transceiver; at least one processor; and at least one memory operably connected to the at least one processor and storing instructions that, based on being executed by the at least one processor, cause the first device to perform operations. For example, the operations may comprise: receiving, from a second device, information for a channel occupancy time, COT; receiving a plurality of physical sidelink shared channels, PSSCHs; and determining to use the COT for transmitting a plurality of physical sidelink feedback channels, PSFCHs, related to the plurality of PSSCHs, based on a first PSFCH, related to a first PSSCH among the plurality PSSCHs, being to be transmitted to the second device on a first resource within a first resource block, RB, set related to the COT.

For example, the plurality of PSSCHs may be received from a plurality of devices including the second device.

For example, additionally, the operations may further comprise: performing a transmission of the first PSFCH using the COT.

For example, performing the transmission of the first PSFCH using the COT may include: transmitting the first PSFCH on the first resource, based on a type 2 listen before talk, LBT, operation.

For example, the type 2 LBT operation may include: performing channel sensing from a time point before a starting time point of the first resource by a channel sensing interval, to the starting time point of the first resource.

For example, a length of the channel sensing interval may be determined based on a channel access priority class, CAPC, value related to the transmission of the first PSFCH.

For example, the CAPC value may be determined to be 1 based on the first PSFCH being a PSFCH.

For example, the channel sensing may include: measuring energy within the channel sensing interval.

For example, the first PSFCH may be transmitted based on a result of the type 2 LBT being IDLE.

For example, additionally, the operations may further comprise: transmitting a second PSFCH, related to a second PSSCH among the plurality of PSSCHs, using the COT on a second resource within the first RB set, based on the determination to use the COT.

For example, the second PSFCH may be transmitted to a third device.

For example, additionally, the operations may further comprise: transmitting a second PSFCH, related to a second PSSCH among the plurality of PSSCHs, using the COT on a second resource within a second RB set, based on the determination to use the COT.

For example, additionally, the operations may further comprise: transmitting a second PSFCH, related to a second PSSCH among the plurality of PSSCHs, using the COT on the first resource, based on the determination to use the COT.

According to an embodiment of the present disclosure, a device adapted to control a first user equipment, UE, may be proposed. For example, the device may comprise: at least one processor; and at least one memory operably connected to the at least one processor and storing instructions that, based on being executed by the at least one processor, cause the first UE to perform operations. For example, the operations may comprise: receiving, from a second UE, information for a channel occupancy time, COT; receiving a plurality of physical sidelink shared channels, PSSCHs; and determining to use the COT for transmitting a plurality of physical sidelink feedback channels, PSFCHs, related to the plurality of PSSCHs, based on a first PSFCH, related to a first PSSCH among the plurality PSSCHs, being to be transmitted to the second UE on a first resource within a first resource block, RB, set related to the COT.

According to an embodiment of the present disclosure, a non-transitory computer-readable storage medium storing instructions may be proposed. For example, the instructions, based on being executed, may cause a first device to: receive, from a second device, information for a channel occupancy time, COT; receive a plurality of physical sidelink shared channels, PSSCHs; and determine to use the COT for transmitting a plurality of physical sidelink feedback channels, PSFCHs, related to the plurality of PSSCHs, based on a first PSFCH, related to a first PSSCH among the plurality PSSCHs, being to be transmitted to the second device on a first resource within a first resource block, RB, set related to the COT.

FIG. 18 shows a procedure for a second device to perform wireless communication, according to one embodiment of the present disclosure. The embodiment of FIG. 18 may be combined with various embodiments of the present disclosure.

Referring to FIG. 18, in step S1810, a second device may transmit, to a first device, information for a channel occupancy time, COT. In step S1820, the second device may transmit, to the first device, a first physical sidelink shared channel, PSSCH. In step S1830, the second device may receive, from the first device, a first physical sidelink feedback channel, PSFCH, related to the first PSSCH based on the COT. For example, the COT may be used for a transmission of a plurality of PSFCHs, based on the first PSFCH among the plurality of PSFCHs to be transmitted by the first device being to be transmitted to the second device.

For example, the plurality of PSFCHs may be related to a plurality of PSSCHs transmitted to the first device from a plurality of devices including the second device.

The embodiments described above may be applied to various devices described below. First, a processor 202 of a second device 200 may control a transceiver 206 to transmit, to a first device 100, information for a channel occupancy time, COT. And, the processor 202 of the second device 200 may control the transceiver 206 to transmit, to the first device 100, a first physical sidelink shared channel, PSSCH. And, the processor 202 of the second device 200 may control the transceiver 206 to receive, from the first device 100, a first physical sidelink feedback channel, PSFCH, related to the first PSSCH based on the COT. For example, the COT may be used for a transmission of a plurality of PSFCHs, based on the first PSFCH among the plurality of PSFCHs to be transmitted by the first device 100 being to be transmitted to the second device 200.

According to an embodiment of the present disclosure, a second device performing wireless communication may be proposed. For example, the second device may comprise: at least one transceiver; at least one processor; and at least one memory operably connected to the at least one processor and storing instructions that, based on being executed by the at least one processor, cause the second device to perform operations. For example, the operations may comprise: transmitting, to a first device, information for a channel occupancy time, COT; transmitting, to the first device, a first physical sidelink shared channel, PSSCH; receiving, from the first device, a first physical sidelink feedback channel, PSFCH, related to the first PSSCH based on the COT, wherein the COT may be used for a transmission of a plurality of PSFCHs, based on the first PSFCH among the plurality of PSFCHs to be transmitted by the first device being to be transmitted to the second device.

For example, the plurality of PSFCHs may be related to a plurality of PSSCHs transmitted to the first device from a plurality of devices including the second device.

Various embodiments of the present disclosure may be combined with each other.

Hereinafter, device(s) to which various embodiments of the present disclosure can be applied will be described.

The various descriptions, functions, procedures, proposals, methods, and/or operational flowcharts of the present disclosure described in this document may be applied to, without being limited to, a variety of fields requiring wireless communication/connection (e.g., 5G) between devices.

Hereinafter, a description will be given in more detail with reference to the drawings. In the following drawings/description, the same reference symbols may denote the same or corresponding hardware blocks, software blocks, or functional blocks unless described otherwise.

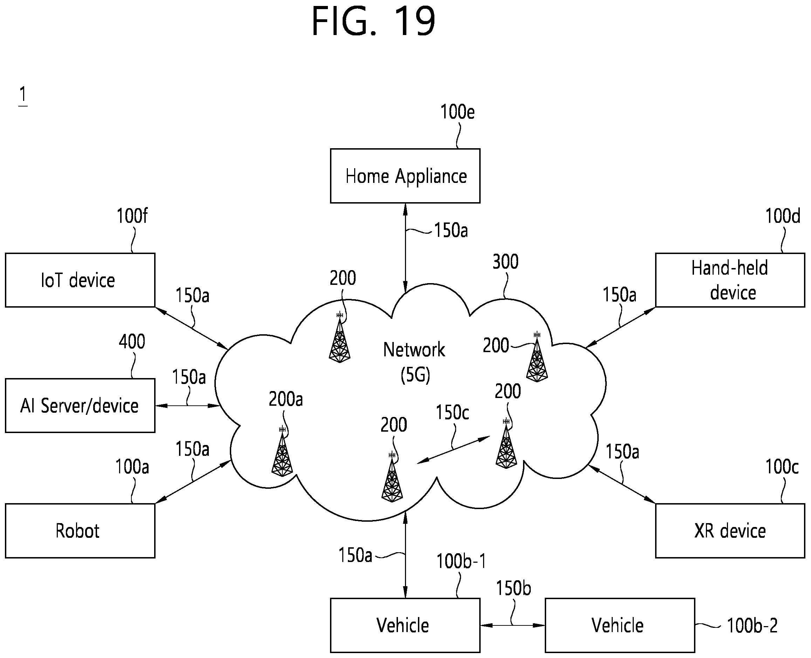

FIG. 19 shows a communication system 1, based on an embodiment of the present disclosure. The embodiment of FIG. 19 may be combined with various embodiments of the present disclosure.

Referring to FIG. 19, a communication system 1 to which various embodiments of the present disclosure are applied includes wireless devices, Base Stations (BSs), and a network. Herein, the wireless devices represent devices performing communication using Radio Access Technology (RAT) (e.g., 5G New RAT (NR)) or Long-Term Evolution (LTE)) and may be referred to as communication/radio/5G devices. The wireless devices may include, without being limited to, a robot 100a, vehicles 100b-1 and 100b-2, an eXtended Reality (XR) device 100c, a hand-held device 100d, a home appliance 100e, an Internet of Things (IoT) device 100f, and an Artificial Intelligence (AI) device/server 400. For example, the vehicles may include a vehicle having a wireless communication function, an autonomous vehicle, and a vehicle capable of performing communication between vehicles. Herein, the vehicles may include an Unmanned Aerial Vehicle (UAV) (e.g., a drone). The XR device may include an Augmented Reality (AR)/Virtual Reality (VR)/Mixed Reality (MR) device and may be implemented in the form of a Head-Mounted Device (HMD), a Head-Up Display (HUD) mounted in a vehicle, a television, a smartphone, a computer, a wearable device, a home appliance device, a digital signage, a vehicle, a robot, etc. The hand-held device may include a smartphone, a smartpad, a wearable device (e.g., a smartwatch or a smartglasses), and a computer (e.g., a notebook). The home appliance may include a TV, a refrigerator, and a washing machine. The IoT device may include a sensor and a smartmeter. For example, the BSs and the network may be implemented as wireless devices and a specific wireless device 200a may operate as a BS/network node with respect to other wireless devices.

Here, wireless communication technology implemented in wireless devices 100a to 100f of the present disclosure may include Narrowband Internet of Things for low-power communication in addition to LTE, NR, and 6G. In this case, for example, NB-IoT technology may be an example of Low Power Wide Area Network (LPWAN) technology and may be implemented as standards such as LTE Cat NB1, and/or LTE Cat NB2, and is not limited to the name described above. Additionally or alternatively, the wireless communication technology implemented in the wireless devices 100a to 100f of the present disclosure may perform communication based on LTE-M technology. In this case, as an example, the LTE-M technology may be an example of the LPWAN and may be called by various names including enhanced Machine Type Communication (eMTC), and the like. For example, the LTE-M technology may be implemented as at least any one of various standards such as 1) LTE CAT 0, 2) LTE Cat M1, 3) LTE Cat M2, 4) LTE non-Bandwidth Limited (non-BL), 5) LTE-MTC, 6) LTE Machine Type Communication, and/or 7) LTE M, and is not limited to the name described above. Additionally or alternatively, the wireless communication technology implemented in the wireless devices 100a to 100f of the present disclosure may include at least one of Bluetooth, Low Power Wide Area Network (LPWAN), and ZigBee considering the low-power communication, and is not limited to the name described above. As an example, the ZigBee technology may generate personal area networks (PAN) related to small/low-power digital communication based on various standards including IEEE 802.15.4, and the like, and may be called by various names.

The wireless devices 100a to 100f may be connected to the network 300 via the BSs 200. An AI technology may be applied to the wireless devices 100a to 100f and the wireless devices 100a to 100f may be connected to the AI server 400 via the network 300. The network 300 may be configured using a 3G network, a 4G (e.g., LTE) network, or a 5G (e.g., NR) network. Although the wireless devices 100a to 100f may communicate with each other through the BSs 200/network 300, the wireless devices 100a to 100f may perform direct communication (e.g., sidelink communication) with each other without passing through the BSs/network. For example, the vehicles 100b-1 and 100b-2 may perform direct communication (e.g. Vehicle-to-Vehicle (V2V)/Vehicle-to-everything (V2X) communication). The IoT device (e.g., a sensor) may perform direct communication with other IoT devices (e.g., sensors) or other wireless devices 100a to 100f.

Wireless communication/connections 150a, 150b, or 150c may be established between the wireless devices 100a to 100f/BS 200, or BS 200BS 200. Herein, the wireless communication/connections may be established through various RATs (e.g., 5G NR) such as uplink/downlink communication 150a, sidelink communication 150b (or, D2D communication), or inter BS communication (e.g. relay, Integrated Access Backhaul (IAB)). The wireless devices and the BSs/the wireless devices may transmit/receive radio signals to/from each other through the wireless communication/connections 150a and 150b. For example, the wireless communication/connections 150a and 150b may transmit/receive signals through various physical channels. To this end, at least a part of various configuration information configuring processes, various signal processing processes (e.g., channel encoding/decoding, modulation/demodulation, and resource mapping/demapping), and resource allocating processes, for transmitting/receiving radio signals, may be performed based on the various proposals of the present disclosure.

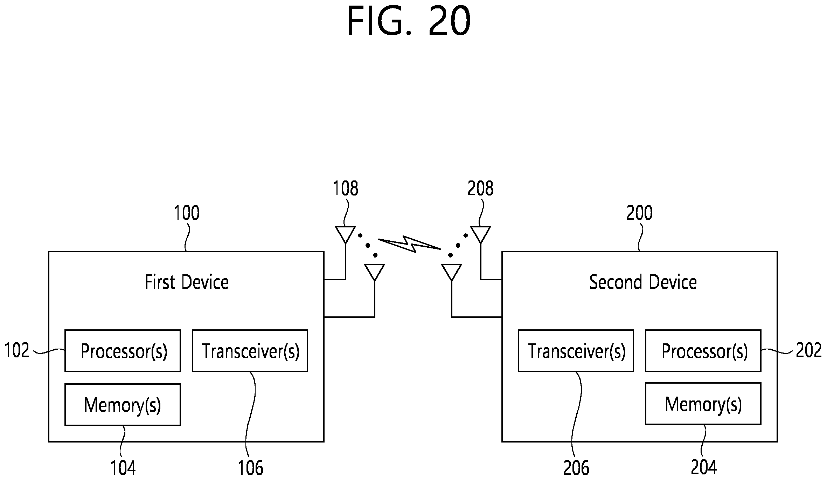

FIG. 20 shows wireless devices, based on an embodiment of the present disclosure. The embodiment of FIG. 20 may be combined with various embodiments of the present disclosure.

Referring to FIG. 20, a first wireless device 100 and a second wireless device 200 may transmit radio signals through a variety of RATs (e.g., LTE and NR). Herein, {the first wireless device 100 and the second wireless device 200} may correspond to {the wireless device 100x and the BS 200} and/or {the wireless device 100x and the wireless device 100x} of FIG. 19.

The first wireless device 100 may include one or more processors 102 and one or more memories 104 and additionally further include one or more transceivers 106 and/or one or more antennas 108. The processor(s) 102 may control the memory(s) 104 and/or the transceiver(s) 106 and may be configured to implement the descriptions, functions, procedures, proposals, methods, and/or operational flowcharts disclosed in this document. For example, the processor(s) 102 may process information within the memory(s) 104 to generate first information/signals and then transmit radio signals including the first information/signals through the transceiver(s) 106. The processor(s) 102 may receive radio signals including second information/signals through the transceiver 106 and then store information obtained by processing the second information/signals in the memory(s) 104. The memory(s) 104 may be connected to the processor(s) 102 and may store a variety of information related to operations of the processor(s) 102. For example, the memory(s) 104 may store software code including commands for performing a part or the entirety of processes controlled by the processor(s) 102 or for performing the descriptions, functions, procedures, proposals, methods, and/or operational flowcharts disclosed in this document. Herein, the processor(s) 102 and the memory(s) 104 may be a part of a communication modem/circuit/chip designed to implement RAT (e.g., LTE or NR). The transceiver(s) 106 may be connected to the processor(s) 102 and transmit and/or receive radio signals through one or more antennas 108. Each of the transceiver(s) 106 may include a transmitter and/or a receiver. The transceiver(s) 106 may be interchangeably used with Radio Frequency (RF) unit(s). In the present disclosure, the wireless device may represent a communication modem/circuit/chip.

The second wireless device 200 may include one or more processors 202 and one or more memories 204 and additionally further include one or more transceivers 206 and/or one or more antennas 208. The processor(s) 202 may control the memory(s) 204 and/or the transceiver(s) 206 and may be configured to implement the descriptions, functions, procedures, proposals, methods, and/or operational flowcharts disclosed in this document. For example, the processor(s) 202 may process information within the memory(s) 204 to generate third information/signals and then transmit radio signals including the third information/signals through the transceiver(s) 206. The processor(s) 202 may receive radio signals including fourth information/signals through the transceiver(s) 106 and then store information obtained by processing the fourth information/signals in the memory(s) 204. The memory(s) 204 may be connected to the processor(s) 202 and may store a variety of information related to operations of the processor(s) 202. For example, the memory(s) 204 may store software code including commands for performing a part or the entirety of processes controlled by the processor(s) 202 or for performing the descriptions, functions, procedures, proposals, methods, and/or operational flowcharts disclosed in this document. Herein, the processor(s) 202 and the memory(s) 204 may be a part of a communication modem/circuit/chip designed to implement RAT (e.g., LTE or NR). The transceiver(s) 206 may be connected to the processor(s) 202 and transmit and/or receive radio signals through one or more antennas 208. Each of the transceiver(s) 206 may include a transmitter and/or a receiver. The transceiver(s) 206 may be interchangeably used with RF unit(s). In the present disclosure, the wireless device may represent a communication modem/circuit/chip.

Hereinafter, hardware elements of the wireless devices 100 and 200 will be described more specifically. One or more protocol layers may be implemented by, without being limited to, one or more processors 102 and 202. For example, the one or more processors 102 and 202 may implement one or more layers (e.g., functional layers such as PHY, MAC, RLC, PDCP, RRC, and SDAP). The one or more processors 102 and 202 may generate one or more Protocol Data Units (PDUs) and/or one or more Service Data Unit (SDUs) according to the descriptions, functions, procedures, proposals, methods, and/or operational flowcharts disclosed in this document. The one or more processors 102 and 202 may generate messages, control information, data, or information according to the descriptions, functions, procedures, proposals, methods, and/or operational flowcharts disclosed in this document. The one or more processors 102 and 202 may generate signals (e.g., baseband signals) including PDUs, SDUs, messages, control information, data, or information according to the descriptions, functions, procedures, proposals, methods, and/or operational flowcharts disclosed in this document and provide the generated signals to the one or more transceivers 106 and 206. The one or more processors 102 and 202 may receive the signals (e.g., baseband signals) from the one or more transceivers 106 and 206 and acquire the PDUs, SDUs, messages, control information, data, or information according to the descriptions, functions, procedures, proposals, methods, and/or operational flowcharts disclosed in this document.

The one or more processors 102 and 202 may be referred to as controllers, microcontrollers, microprocessors, or microcomputers. The one or more processors 102 and 202 may be implemented by hardware, firmware, software, or a combination thereof. As an example, one or more Application Specific Integrated Circuits (ASICs), one or more Digital Signal Processors (DSPs), one or more Digital Signal Processing Devices (DSPDs), one or more Programmable Logic Devices (PLDs), or one or more Field Programmable Gate Arrays (FPGAs) may be included in the one or more processors 102 and 202. The descriptions, functions, procedures, proposals, methods, and/or operational flowcharts disclosed in this document may be implemented using firmware or software and the firmware or software may be configured to include the modules, procedures, or functions. Firmware or software configured to perform the descriptions, functions, procedures, proposals, methods, and/or operational flowcharts disclosed in this document may be included in the one or more processors 102 and 202 or stored in the one or more memories 104 and 204 so as to be driven by the one or more processors 102 and 202. The descriptions, functions, procedures, proposals, methods, and/or operational flowcharts disclosed in this document may be implemented using firmware or software in the form of code, commands, and/or a set of commands.

The one or more memories 104 and 204 may be connected to the one or more processors 102 and 202 and store various types of data, signals, messages, information, programs, code, instructions, and/or commands. The one or more memories 104 and 204 may be configured by Read-Only Memories (ROMs), Random Access Memories (RAMs), Electrically Erasable Programmable Read-Only Memories (EPROMs), flash memories, hard drives, registers, cash memories, computer-readable storage media, and/or combinations thereof. The one or more memories 104 and 204 may be located at the interior and/or exterior of the one or more processors 102 and 202. The one or more memories 104 and 204 may be connected to the one or more processors 102 and 202 through various technologies such as wired or wireless connection.

The one or more transceivers 106 and 206 may transmit user data, control information, and/or radio signals/channels, mentioned in the methods and/or operational flowcharts of this document, to one or more other devices. The one or more transceivers 106 and 206 may receive user data, control information, and/or radio signals/channels, mentioned in the descriptions, functions, procedures, proposals, methods, and/or operational flowcharts disclosed in this document, from one or more other devices. For example, the one or more transceivers 106 and 206 may be connected to the one or more processors 102 and 202 and transmit and receive radio signals. For example, the one or more processors 102 and 202 may perform control so that the one or more transceivers 106 and 206 may transmit user data, control information, or radio signals to one or more other devices. The one or more processors 102 and 202 may perform control so that the one or more transceivers 106 and 206 may receive user data, control information, or radio signals from one or more other devices. The one or more transceivers 106 and 206 may be connected to the one or more antennas 108 and 208 and the one or more transceivers 106 and 206 may be configured to transmit and receive user data, control information, and/or radio signals/channels, mentioned in the descriptions, functions, procedures, proposals, methods, and/or operational flowcharts disclosed in this document, through the one or more antennas 108 and 208. In this document, the one or more antennas may be a plurality of physical antennas or a plurality of logical antennas (e.g., antenna ports). The one or more transceivers 106 and 206 may convert received radio signals/channels etc. from RF band signals into baseband signals in order to process received user data, control information, radio signals/channels, etc. using the one or more processors 102 and 202. The one or more transceivers 106 and 206 may convert the user data, control information, radio signals/channels, etc. processed using the one or more processors 102 and 202 from the base band signals into the RF band signals. To this end, the one or more transceivers 106 and 206 may include (analog) oscillators and/or filters.

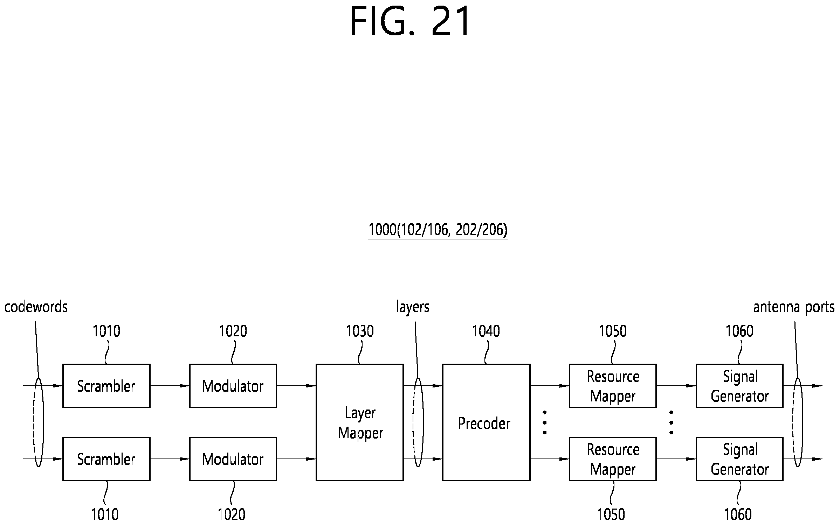

FIG. 21 shows a signal process circuit for a transmission signal, based on an embodiment of the present disclosure. The embodiment of FIG. 21 may be combined with various embodiments of the present disclosure.

Referring to FIG. 21, a signal processing circuit 1000 may include scramblers 1010, modulators 1020, a layer mapper 1030, a precoder 1040, resource mappers 1050, and signal generators 1060. An operation/function of FIG. 21 may be performed, without being limited to, the processors 102 and 202 and/or the transceivers 106 and 206 of FIG. 20. Hardware elements of FIG. 21 may be implemented by the processors 102 and 202 and/or the transceivers 106 and 206 of FIG. 20. For example, blocks 1010 to 1060 may be implemented by the processors 102 and 202 of FIG. 20. Alternatively, the blocks 1010 to 1050 may be implemented by the processors 102 and 202 of FIG. 20 and the block 1060 may be implemented by the transceivers 106 and 206 of FIG. 20.

Codewords may be converted into radio signals via the signal processing circuit 1000 of FIG. 21. Herein, the codewords are encoded bit sequences of information blocks. The information blocks may include transport blocks (e.g., a UL-SCH transport block, a DL-SCH transport block). The radio signals may be transmitted through various physical channels (e.g., a PUSCH and a PDSCH).

Specifically, the codewords may be converted into scrambled bit sequences by the scramblers 1010. Scramble sequences used for scrambling may be generated based on an initialization value, and the initialization value may include ID information of a wireless device. The scrambled bit sequences may be modulated to modulation symbol sequences by the modulators 1020. A modulation scheme may include pi/2-Binary Phase Shift Keying (pi/2-BPSK), m-Phase Shift Keying (m-PSK), and m-Quadrature Amplitude Modulation (m-QAM). Complex modulation symbol sequences may be mapped to one or more transport layers by the layer mapper 1030. Modulation symbols of each transport layer may be mapped (precoded) to corresponding antenna port(s) by the precoder 1040. Outputs z of the precoder 1040 may be obtained by multiplying outputs y of the layer mapper 1030 by an N*M precoding matrix W. Herein, N is the number of antenna ports and M is the number of transport layers. The precoder 1040 may perform precoding after performing transform precoding (e.g., DFT) for complex modulation symbols. Alternatively, the precoder 1040 may perform precoding without performing transform precoding.

The resource mappers 1050 may map modulation symbols of each antenna port to time-frequency resources. The time-frequency resources may include a plurality of symbols (e.g., a CP-OFDMA symbols and DFT-s-OFDMA symbols) in the time domain and a plurality of subcarriers in the frequency domain. The signal generators 1060 may generate radio signals from the mapped modulation symbols and the generated radio signals may be transmitted to other devices through each antenna. For this purpose, the signal generators 1060 may include Inverse Fast Fourier Transform (IFFT) modules, Cyclic Prefix (CP) inserters, Digital-to-Analog Converters (DACs), and frequency up-converters.

Signal processing procedures for a signal received in the wireless device may be configured in a reverse manner of the signal processing procedures 1010 to 1060 of FIG. 21. For example, the wireless devices (e.g., 100 and 200 of FIG. 20) may receive radio signals from the exterior through the antenna ports/transceivers. The received radio signals may be converted into baseband signals through signal restorers. To this end, the signal restorers may include frequency downlink converters, Analog-to-Digital Converters (ADCs), CP remover, and Fast Fourier Transform (FFT) modules. Next, the baseband signals may be restored to codewords through a resource demapping procedure, a postcoding procedure, a demodulation processor, and a descrambling procedure. The codewords may be restored to original information blocks through decoding. Therefore, a signal processing circuit (not illustrated) for a reception signal may include signal restorers, resource demappers, a postcoder, demodulators, descramblers, and decoders.

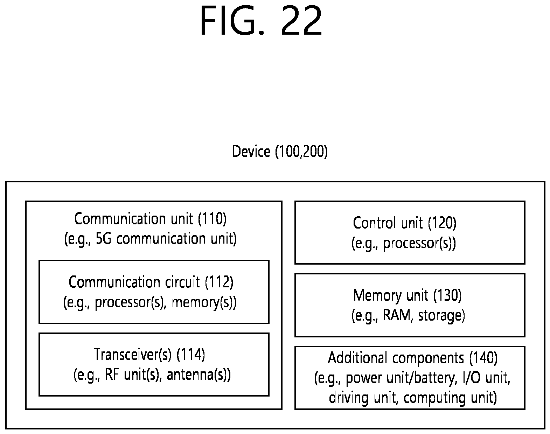

FIG. 22 shows another example of a wireless device, based on an embodiment of the present disclosure. The wireless device may be implemented in various forms according to a use-case/service (refer to FIG. 19). The embodiment of FIG. 22 may be combined with various embodiments of the present disclosure.

Referring to FIG. 22, wireless devices 100 and 200 may correspond to the wireless devices 100 and 200 of FIG. 20 and may be configured by various elements, components, units/portions, and/or modules. For example, each of the wireless devices 100 and 200 may include a communication unit 110, a control unit 120, a memory unit 130, and additional components 140. The communication unit may include a communication circuit 112 and transceiver(s) 114. For example, the communication circuit 112 may include the one or more processors 102 and 202 and/or the one or more memories 104 and 204 of FIG. 20. For example, the transceiver(s) 114 may include the one or more transceivers 106 and 206 and/or the one or more antennas 108 and 208 of FIG. 20. The control unit 120 is electrically connected to the communication unit 110, the memory 130, and the additional components 140 and controls overall operation of the wireless devices. For example, the control unit 120 may control an electric/mechanical operation of the wireless device based on programs/code/commands/information stored in the memory unit 130. The control unit 120 may transmit the information stored in the memory unit 130 to the exterior (e.g., other communication devices) via the communication unit 110 through a wireless/wired interface or store, in the memory unit 130, information received through the wireless/wired interface from the exterior (e.g., other communication devices) via the communication unit 110.

The additional components 140 may be variously configured according to types of wireless devices. For example, the additional components 140 may include at least one of a power unit/battery, input/output (I/O) unit, a driving unit, and a computing unit. The wireless device may be implemented in the form of, without being limited to, the robot (100a of FIG. 19), the vehicles (100b-1 and 100b-2 of FIG. 19), the XR device (100c of FIG. 19), the hand-held device (100d of FIG. 19), the home appliance (100e of FIG. 19), the IoT device (100f of FIG. 19), a digital broadcast terminal, a hologram device, a public safety device, an MTC device, a medicine device, a fintech device (or a finance device), a security device, a climate/environment device, the AI server/device (400 of FIG. 19), the BSs (200 of FIG. 19), a network node, etc. The wireless device may be used in a mobile or fixed place according to a use-example/service.

In FIG. 22, the entirety of the various elements, components, units/portions, and/or modules in the wireless devices 100 and 200 may be connected to each other through a wired interface or at least a part thereof may be wirelessly connected through the communication unit 110. For example, in each of the wireless devices 100 and 200, the control unit 120 and the communication unit 110 may be connected by wire and the control unit 120 and first units (e.g., 130 and 140) may be wirelessly connected through the communication unit 110. Each element, component, unit/portion, and/or module within the wireless devices 100 and 200 may further include one or more elements. For example, the control unit 120 may be configured by a set of one or more processors. As an example, the control unit 120 may be configured by a set of a communication control processor, an application processor, an Electronic Control Unit (ECU), a graphical processing unit, and a memory control processor. As another example, the memory 130 may be configured by a Random Access Memory (RAM), a Dynamic RAM (DRAM), a Read Only Memory (ROM)), a flash memory, a volatile memory, a non-volatile memory, and/or a combination thereof.

Hereinafter, an example of implementing FIG. 22 will be described in detail with reference to the drawings.

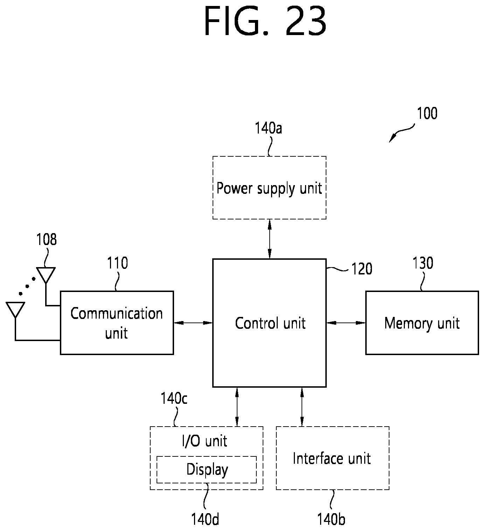

FIG. 23 shows a hand-held device, based on an embodiment of the present disclosure. The hand-held device may include a smartphone, a smartpad, a wearable device (e.g., a smartwatch or a smartglasses), or a portable computer (e.g., a notebook). The hand-held device may be referred to as a mobile station (MS), a user terminal (UT), a Mobile Subscriber Station (MSS), a Subscriber Station (SS), an Advanced Mobile Station (AMS), or a Wireless Terminal (WT). The embodiment of FIG. 23 may be combined with various embodiments of the present disclosure.

Referring to FIG. 23, a hand-held device 100 may include an antenna unit 108, a communication unit 110, a control unit 120, a memory unit 130, a power supply unit 140a, an interface unit 140b, and an I/O unit 140c. The antenna unit 108 may be configured as a part of the communication unit 110. Blocks 110 to 130/140a to140c correspond to the blocks 110 to 130/140 of FIG. 22, respectively.

The communication unit 110 may transmit and receive signals (e.g., data and control signals) to and from other wireless devices or BSs. The control unit 120 may perform various operations by controlling constituent elements of the hand-held device 100. The control unit 120 may include an Application Processor (AP). The memory unit 130 may store data/parameters/programs/code/commands needed to drive the hand-held device 100. The memory unit 130 may store input/output data/information. The power supply unit 140a may supply power to the hand-held device 100 and include a wired/wireless charging circuit, a battery, etc. The interface unit 140b may support connection of the hand-held device 100 to other external devices. The interface unit 140b may include various ports (e.g., an audio I/O port and a video I/O port) for connection with external devices. The I/O unit 140c may input or output video information/signals, audio information/signals, data, and/or information input by a user. The I/O unit 140c may include a camera, a microphone, a user input unit, a display unit 140d, a speaker, and/or a haptic module.

As an example, in the case of data communication, the I/O unit 140c may acquire information/signals (e.g., touch, text, voice, images, or video) input by a user and the acquired information/signals may be stored in the memory unit 130. The communication unit 110 may convert the information/signals stored in the memory into radio signals and transmit the converted radio signals to other wireless devices directly or to a BS. The communication unit 110 may receive radio signals from other wireless devices or the BS and then restore the received radio signals into original information/signals. The restored information/signals may be stored in the memory unit 130 and may be output as various types (e.g., text, voice, images, video, or haptic) through the I/O unit 140c.

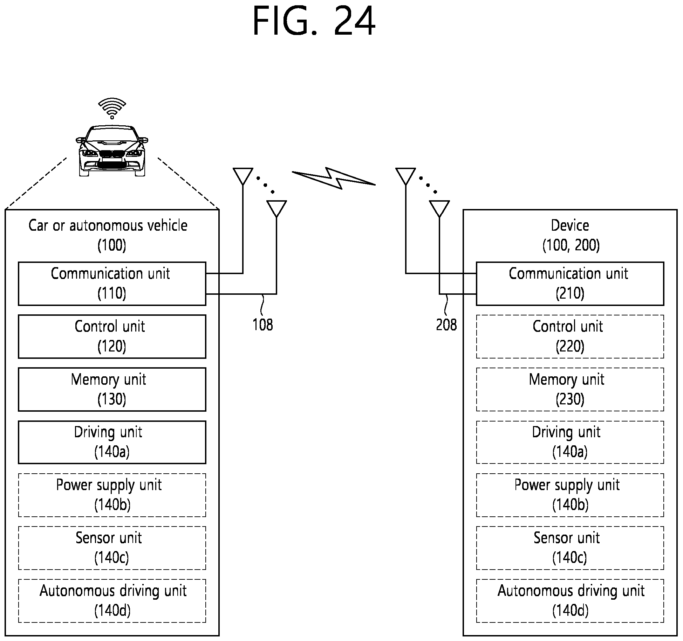

FIG. 24 shows a vehicle or an autonomous vehicle, based on an embodiment of the present disclosure. The vehicle or autonomous vehicle may be implemented by a mobile robot, a car, a train, a manned/unmanned Aerial Vehicle (AV), a ship, etc. The embodiment of FIG. 24 may be combined with various embodiments of the present disclosure.

Referring to FIG. 24, a vehicle or autonomous vehicle 100 may include an antenna unit 108, a communication unit 110, a control unit 120, a driving unit 140a, a power supply unit 140b, a sensor unit 140c, and an autonomous driving unit 140d. The antenna unit 108 may be configured as a part of the communication unit 110. The blocks 110/130/140a to 140d correspond to the blocks 110/130/140 of FIG. 22, respectively.

The communication unit 110 may transmit and receive signals (e.g., data and control signals) to and from external devices such as other vehicles, BSs (e.g., gNBs and road side units), and servers. The control unit 120 may perform various operations by controlling elements of the vehicle or the autonomous vehicle 100. The control unit 120 may include an Electronic Control Unit (ECU). The driving unit 140a may cause the vehicle or the autonomous vehicle 100 to drive on a road. The driving unit 140a may include an engine, a motor, a powertrain, a wheel, a brake, a steering device, etc. The power supply unit 140b may supply power to the vehicle or the autonomous vehicle 100 and include a wired/wireless charging circuit, a battery, etc. The sensor unit 140c may acquire a vehicle state, ambient environment information, user information, etc. The sensor unit 140c may include an Inertial Measurement Unit (IMU) sensor, a collision sensor, a wheel sensor, a speed sensor, a slope sensor, a weight sensor, a heading sensor, a position module, a vehicle forward/backward sensor, a battery sensor, a fuel sensor, a tire sensor, a steering sensor, a temperature sensor, a humidity sensor, an ultrasonic sensor, an illumination sensor, a pedal position sensor, etc. The autonomous driving unit 140d may implement technology for maintaining a lane on which a vehicle is driving, technology for automatically adjusting speed, such as adaptive cruise control, technology for autonomously driving along a determined path, technology for driving by automatically setting a path if a destination is set, and the like.

For example, the communication unit 110 may receive map data, traffic information data, etc. from an external server. The autonomous driving unit 140d may generate an autonomous driving path and a driving plan from the obtained data. The control unit 120 may control the driving unit 140a such that the vehicle or the autonomous vehicle 100 may move along the autonomous driving path according to the driving plan (e.g., speed/direction control). In the middle of autonomous driving, the communication unit 110 may aperiodically/periodically acquire recent traffic information data from the external server and acquire surrounding traffic information data from neighboring vehicles. In the middle of autonomous driving, the sensor unit 140c may obtain a vehicle state and/or surrounding environment information. The autonomous driving unit 140d may update the autonomous driving path and the driving plan based on the newly obtained data/information. The communication unit 110 may transfer information about a vehicle position, the autonomous driving path, and/or the driving plan to the external server. The external server may predict traffic information data using AI technology, etc., based on the information collected from vehicles or autonomous vehicles and provide the predicted traffic information data to the vehicles or the autonomous vehicles.

Claims in the present description can be combined in a various way. For instance, technical features in method claims of the present description can be combined to be implemented or performed in an apparatus, and technical features in apparatus claims can be combined to be implemented or performed in a method. Further, technical features in method claim(s) and apparatus claim(s) can be combined to be implemented or performed in an apparatus. Further, technical features in method claim(s) and apparatus claim(s) can be combined to be implemented or performed in a method.

## Claims

1. A method for performing, by a first device, wireless communication, the method comprising:
receiving, from a second device, information for a channel occupancy time, COT;
receiving a plurality of physical sidelink shared channels, PSSCHs; and
determining to use the COT for transmitting a plurality of physical sidelink feedback channels, PSFCHs, related to the plurality of PSSCHs, based on a first PSFCH, related to a first PSSCH among the plurality PSSCHs, being to be transmitted to the second device on a first resource within a first resource block, RB, set related to the COT.

2. The method of claim 1, wherein the plurality of PSSCHs are received from a plurality of devices including the second device.

3. The method of claim 1, further comprising:
performing a transmission of the first PSFCH using the COT.

4. The method of claim 3, wherein performing the transmission of the first PSFCH using the COT includes: transmitting the first PSFCH on the first resource, based on a type 2 listen before talk, LBT, operation.

5. The method of claim 4, wherein the type 2 LBT operation includes:
performing channel sensing from a time point before a starting time point of the first resource by a channel sensing interval, to the starting time point of the first resource.

6. The method of claim 5, wherein a length of the channel sensing interval is determined based on a channel access priority class, CAPC, value related to the transmission of the first PSFCH.

7. The method of claim 6, wherein the CAPC value is determined to be 1 based on the first PSFCH being a PSFCH.

8. The method of claim 5, wherein the channel sensing includes:
measuring energy within the channel sensing interval.

9. The method of claim 4, wherein the first PSFCH is transmitted based on a result of the type 2 LBT being IDLE.

10. The method of claim 1, further comprising:
transmitting a second PSFCH, related to a second PSSCH among the plurality of PSSCHs, using the COT on a second resource within the first RB set, based on the determination to use the COT.

11. The method of claim 10, wherein the second PSFCH is transmitted to a third device.

12. The method of claim 1, further comprising:
transmitting a second PSFCH, related to a second PSSCH among the plurality of PSSCHs, using the COT on a second resource within a second RB set, based on the determination to use the COT.

13. The method of claim 1, further comprising:
transmitting a second PSFCH, related to a second PSSCH among the plurality of PSSCHs, using the COT on the first resource, based on the determination to use the COT.

14. A first device performing wireless communication, the first device comprising:
at least one transceiver;
at least one processor; and
at least one memory operably connected to the at least one processor and storing instructions that, based on being executed by the at least one processor, cause the first device to perform operations,
wherein the operations comprise:
receiving, from a second device, information for a channel occupancy time, COT;
receiving a plurality of physical sidelink shared channels, PSSCHs; and
determining to use the COT for transmitting a plurality of physical sidelink feedback channels, PSFCHs, related to the plurality of PSSCHs, based on a first PSFCH, related to a first PSSCH among the plurality PSSCHs, being to be transmitted to the second device on a first resource within a first resource block, RB, set related to the COT.

15. A device adapted to control a first user equipment, UE, the device comprising:
at least one processor; and
at least one memory operably connected to the at least one processor and storing instructions that, based on being executed by the at least one processor, cause the first UE to perform operations,
wherein the operations comprise:
receiving, from a second UE, information for a channel occupancy time, COT;
receiving a plurality of physical sidelink shared channels, PSSCHs; and
determining to use the COT for transmitting a plurality of physical sidelink feedback channels, PSFCHs, related to the plurality of PSSCHs, based on a first PSFCH, related to a first PSSCH among the plurality PSSCHs, being to be transmitted to the second UE on a first resource within a first resource block, RB, set related to the COT.

16. A non-transitory computer-readable storage medium storing instructions that, based on being executed, cause a first device to:
receive, from a second device, information for a channel occupancy time, COT;
receive a plurality of physical sidelink shared channels, PSSCHs; and
determine to use the COT for transmitting a plurality of physical sidelink feedback channels, PSFCHs, related to the plurality of PSSCHs, based on a first PSFCH, related to a first PSSCH among the plurality PSSCHs, being to be transmitted to the second device on a first resource within a first resource block, RB, set related to the COT.

17. A method for performing, by a second device, wireless communication, the method comprising:
transmitting, to a first device, information for a channel occupancy time, COT;
transmitting, to the first device, a first physical sidelink shared channel, PSSCH;
receiving, from the first device, a first physical sidelink feedback channel, PSFCH, related to the first PSSCH based on the COT,
wherein the COT is used for a transmission of a plurality of PSFCHs, based on the first PSFCH among the plurality of PSFCHs to be transmitted by the first device being to be transmitted to the second device.

18. The method of claim 17, wherein the plurality of PSFCHs are related to a plurality of PSSCHs transmitted to the first device from a plurality of devices including the second device.

19. A second device performing wireless communication, the second device comprising:
at least one transceiver;
at least one processor; and
at least one memory operably connected to the at least one processor and storing instructions that, based on being executed by the at least one processor, cause the second device to perform operations,
wherein the operations comprise:
transmitting, to a first device, information for a channel occupancy time, COT;
transmitting, to the first device, a first physical sidelink shared channel, PSSCH;
receiving, from the first device, a first physical sidelink feedback channel, PSFCH, related to the first PSSCH based on the COT,
wherein the COT is used for a transmission of a plurality of PSFCHs, based on the first PSFCH among the plurality of PSFCHs to be transmitted by the first device being to be transmitted to the second device.

20. The method of claim 19, wherein the plurality of PSFCHs are related to a plurality of PSSCHs transmitted to the first device from a plurality of devices including the second device.
